(19) **Europäisches Patentamt**
**European Patent Office**
**Office européen des brevets**

(11) **EP 2 857 301 B1**

(12) **EUROPEAN PATENT SPECIFICATION**

(45) Date of publication and mention
of the grant of the patent:
**03.05.2017 Bulletin 2017/18**

(51) Int Cl.:
***B62K 23/04*** *(2006.01)* ***B62K 11/14*** *(2006.01)*

(21) Application number: **13793894.0**

(22) Date of filing: **28.02.2013**

(86) International application number:
**PCT/JP2013/001241**

(87) International publication number:
**WO 2013/175680 (28.11.2013 Gazette 2013/48)**

(54) **VEHICLE**

FAHRZEUG

VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2012 JP 2012119892**

(43) Date of publication of application:
**08.04.2015 Bulletin 2015/15**

(73) Proprietor: **Yamaha Hatsudoki Kabushiki Kaisha
Iwata-shi, Shizuoka 438-8501 (JP)**

(72) Inventors:
• **FUJITO, Manabu
Iwata-shi
Shizuoka 438-8501 (JP)**
• **FUJII, Takahiro
Iwata-shi
Shizuoka 438-8501 (JP)**

• **SAKAI, Kouji
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
**JP-A- H08 192 731      JP-A- H08 192 731
JP-A- H09 249 043      JP-A- H09 249 043
JP-A- 2002 160 659     JP-A- 2002 160 659
JP-A- 2006 240 491     JP-A- 2006 240 491
JP-A- 2009 041 544     JP-A- 2009 041 544**

**Description**

The present invention relates to a vehicle.

Prior art document JP H08 192731 A, according to the respective preambles of claims 1 and 11, relates to a device for warning a driver of a vehicle, wherein difference between the wheel speed and the vehicle speed is determined and a reaction is applied on an operation input to generate a warning in case an unstable condition is determined. Prior art document JP 2002 160659 A relates to a drive control device for a vehicle and a control program of a controller, wherein said vehicle is operated by means of a joystick in consideration of a tire friction circle. Prior art document JP 2009 041544 A relates to an operation assist device and a drive force control device, wherein it is suggested to generate a reaction force against operation of the drive device. Said reaction force is generated in consideration of change amount of operation force, change amount of operation amount of the operation device or operation speed of the operation device. Further prior art document JP 2006 240491 A relates to a control device and drive system for a motorcycle, which deals with a tire transverse force and output torque of the engine in view of said tire transverse force. Further prior art document JP H09 249043 A relates to a control device for an acceleration reaction force by an ascending and descending slope.

When a vehicle such as a motorcycle travels along a curve, acceleration in a transverse direction is generated in the vehicle. In that case, when acceleration in a front-to-rear direction of the vehicle is large, stability of the vehicle is decreased. Therefore, in Patent Document 1, the acceleration in the transverse direction of the vehicle is detected, and an engine torque is adjusted based on the detected acceleration such that the acceleration in the front-to-rear direction of the vehicle does not become too large.

[Patent Document 1] JP 2004-99026 A

In the above-mentioned Patent Document 1, however, the engine torque is automatically adjusted according to the acceleration in the transverse direction, but not intention of the rider. Therefore, behavior of the vehicle sometimes changes against the intention of the driver, so that drivability of the driver is decreased.

An object of the present invention is to provide a vehicle that can travel stably without a decrease in drivability.

According to the present invention said object is solved by a vehicle having the features of independent claim 1 or 11. Moreover, According to the present invention said object is also solved by a method for controlling travel stability of a vehicle having the features of independent claim 12 or 13. Preferred embodiments are laid down in the dependent claims.

(1) According to one aspect of the present invention, a vehicle includes a body having a drive wheel, a motor that generates a torque for rotating the drive wheel, an output adjustment device operated by a driver for adjustment of output of the motor, a reaction force adjustor configured to adjust reaction force applied from the output adjustment device to the driver with respect to operation of the output adjustment device, an acceleration detector configured to detect acceleration of the body, and a controller configured to control the reaction force adjustor based on the acceleration detected by the acceleration detector.

In the vehicle, the driver operates the output adjustment device, so that the output of the motor is adjusted. The drive wheel is rotated by the torque generated by the motor. Thus, the body is moved. The reaction force applied from the output adjustment device to the driver with respect to the operation of the output adjustment device is adjusted by the reaction force adjustor. The reaction force adjustor is controlled by the controller based on the acceleration detected by the acceleration detector.

In this case, the reaction force applied from the output adjustment device to the driver changes according to the acceleration of the body. Thus, it is possible to let the driver recognize whether or not the acceleration of the body is appropriate for stable travel. Further, the driver can voluntarily adjust the output of the motor according to a change in the reaction force from the output adjustment device. Therefore, the driver can let the vehicle travel stably without a decrease in the drivability of the driver.

(2) The acceleration detector may be configured to detect acceleration in a transverse direction that is substantially parallel to a road surface and intersects with a front-to-rear direction of the body as transverse direction acceleration, and the controller may be configured to acquire maximum allowable acceleration in the front-to-rear direction of the body corresponding to the transverse direction acceleration detected by the acceleration detector as longitudinal direction limit acceleration based on a set friction circle, and control the reaction force adjustor based on the acquired longitudinal direction limit acceleration.

In this case, the longitudinal direction limit acceleration can be easily acquired based on the transverse direction acceleration detected by the acceleration detector and the set friction circle. Further, it is possible to let the driver accurately recognize whether or not the acceleration of the body is appropriate for the stable travel based on the acquired longitudinal direction limit acceleration. Therefore, the driver can make the vehicle travel stably.

(3) The controller may be configured to selectively perform one of first control operation in which the reaction force adjustor is controlled such that reaction force of a reference value determined according to an operation amount of the output adjustment device is applied from the output adjustment device to the driver, and second control operation in which the reaction force adjustor is controlled such that reaction force of a total value of an additional value not less than 0 and the reference value is applied from the output adjustment device to the driver, based on the acquired longitudinal direction limit acceleration.

In this case, the reaction force applied to the driver at the time of the second control operation is larger than the reaction force applied to the driver at the time of the first control operation. Therefore, it is possible to let the driver easily recognize whether or not the acceleration of the body is appropriate for the stable travel by selectively performing the first control operation and the second control operation. Further, the second control operation is performed when the acceleration of the body is large, whereby the operation of the output adjustment device by the driver is inhibited and a further increase in the acceleration of the body is inhibited. Thus, the stability of the vehicle is ensured.

(4) The vehicle may further include a change gear ratio acquirer configured to acquire a change gear ratio between the motor and the drive wheel, wherein the controller may be configured to calculate a maximum allowable torque for rotating the drive wheel as a limit torque based on the change gear ratio acquired by the change gear ratio acquirer and the acquired longitudinal direction limit acceleration, and selectively perform one of the first control operation and the second control operation based on the calculated limit torque and a current torque generated by the motor.

In this case, it is possible to let the driver recognize a relation between the calculated limit torque and the current torque. Thus, it is possible to let the driver recognize whether or not the acceleration of the body is appropriate for the stable travel. Therefore, the driver can make the vehicle travel stably.

(5) The motor may include an engine, the vehicle may further include an intake amount correspondence value detector configured to detect an intake amount correspondence value that corresponds to an intake amount of the engine, and a rotation speed detector configured to detect a rotation speed of the engine, wherein the controller may be configured to calculate the current torque based on the intake amount correspondence value detected by the intake amount correspondence value detector and the rotation speed detected by the rotation speed detector, and selectively perform one of the first control operation and the second control operation based on the calculated limited torque and the calculated current torque.

In this case, the current torque generated by the engine can be accurately calculated. Thus, it is possible to let the driver accurately recognize the relation between the calculated limit torque and the current torque. Therefore, it is possible to let the driver accurately recognize whether or not the acceleration of the body is appropriate for the stable travel.

(6) The controller may be configured to perform the first control operation when a difference between the calculated limit torque and the current torque is not less than a predetermined threshold value, and perform the second control operation when the difference is less than the threshold value.

In this case, the reaction force applied to the driver when the difference between the limit torque and the current torque is small becomes large as compared to the reaction force applied to the driver when the difference between the limit torque and the current torque is large. Thus, the operation of the output adjustment device by the driver is inhibited, and a further increase in the acceleration of the body is inhibited. Thus, the stability of the vehicle is ensured.

(7) The controller may be configured to perform one of the first control operation and the second control operation based on a change amount in a difference between the calculated limit torque and the current torque.

In this case, it is possible to let the driver recognize a change in the difference between the limit torque and the current torque. Thus, it is possible to let the driver recognize whether or not the acceleration of the body is appropriate for the stable travel.

(8) The controller may be configured to calculate the additional value based on the torque generated by the motor as the second control operation such that the larger the torque generated by the motor is, the larger the additional value is.

In this case, the larger the torque generated by the motor is, the larger the reaction force applied to the driver is. Thus, the torque generated by the motor is prevented from becoming excessively large. Therefore, the stability of the vehicle is ensured.

(9) The controller may be configured to calculate the additional value as the second control operation such that the smaller a difference between the calculated limit torque and the current torque is, the larger the additional value is.

In this case, the smaller the difference between the limit torque and the current torque is, the larger the reaction force applied to the driver is. Thus, the current torque is prevented from becoming larger than the limit torque. Therefore, the stability of the vehicle is ensured.

(10) The controller may be configured to calculate the additional value based on a change amount in the operation amount of the output adjustment device as the second control operation.

In this case, a rapid change in the operation amount of the output adjustment device can be inhibited. Thus, the stability of the vehicle is ensured.

(11) The controller may be configured to calculate the additional value based on a change amount in a difference between the calculated limit torque and the current torque as the second control operation.

In this case, the rapid change in the operation amount of the output adjustment device can be inhibited. Thus, the stability of the vehicle is ensured.

(12) The controller may be configured to calculate a first additional value based on the torque generated by the motor such that the larger the torque generated by the motor is, the larger the additional value is, calculate a second additional value based on a change amount in the operation amount of the output adjustment device, and calculate the additional value by summing up the calculated first and second additional values, as the second control operation.

In this case, the torque generated by the motor is prevented from becoming excessively large. Further, the rapid change in the operation amount of the output adjustment device can be inhibited. Thus, the stability of the vehicle is sufficiently ensured.

The controller may calculate the first additional value such that the smaller the difference between the calculated limit torque and the current torque is, the larger the additional value is. Further, the controller may calculate the second additional value based on the change amount in the difference between the calculated limit torque and the current torque.

(13) The vehicle may further include a setting unit operated by the driver for setting of the friction circle.

In this case, the driver can arbitrarily set the friction circle according to various conditions. Thus, the longitudinal direction limit acceleration can be accurately acquired. Therefore, it is possible to let the driver accurately recognize whether or not the acceleration of the body is appropriate for the stable travel.

(14) The friction circle may include an ellipse. In this case, the longitudinal direction limit acceleration can be more accurately acquired. Therefore, it is possible to let the driver accurately recognize whether or not the acceleration of the body is appropriate.

(15) The controller may be configured to determine the reference value such that, when a torque is transmitted from the motor to the drive wheel, the reference value shows a first change according to an operation amount of the output adjustment device, and such that, when a torque is transmitted from the drive wheel to the motor, the reference value shows a second change different from the first change according to the operation amount of the output adjustment device.

In this case, the reaction force applied to the driver differs between a case in which the body is accelerated and a case in which the body is decelerated. Thus, it is possible to let the driver easily recognize the acceleration and the deceleration of the body.

(16) According to another aspect of the present invention, a vehicle includes a body having a drive wheel, a motor that generates a torque for rotating the drive wheel, an output adjustment device operated by a driver for adjustment of output of the motor, a reaction force adjuster configured to adjust reaction force applied from the output adjustment device to the driver with respect to operation of the output adjustment device, and a controller configured to control the reaction force adjuster such that reaction force based on a reference value determined according to an operation amount of the output adjustment device is applied from the output adjustment device to the driver, wherein the controller is configured to determine the reference value such that, when a torque is transmitted from the motor to the drive wheel, the reference value shows a first change according to an operation amount of the output adjustment device, and such that, when a torque is transmitted from the drive wheel to the motor, the reference value shows a second change different from the first change according to the operation amount of the output adjustment device.

In the vehicle, the driver operates the output adjustment device, so that the output of the motor is adjusted. The drive wheel is rotated by the torque generated by the motor. Thus, the body is moved. The reaction force applied from the output adjustment device to the driver with respect to the operation of the output adjustment device is adjusted by the reaction force adjustor. The reaction force adjustor is controlled by the controller such that the reaction force based on the reference value determined according to the operation amount of the output adjustment device is applied from the output adjustment device to the driver.

When the torque is transmitted from the motor to the drive wheel, the reference value shows the first change according to the operation amount of the output adjustment device. On the other hand, when the torque is transmitted from the drive wheel to the motor, the reference value shows the second change different from the first change according to the operation amount of the output adjustment device. Thus, the reaction force applied to the driver differs between a case in which the body is accelerated and a case in which the body is decelerated. Therefore, it is possible to let the driver easily recognize the acceleration and the deceleration of the body. Further, the driver can voluntarily adjust the output of the motor according to the change in the reaction force from the output adjustment device. Thus, the driver can make the vehicle travel stably without a decrease in the drivability of the driver.

(17) A reaction force control device for adjusting reaction force applied from an output adjustment device provided in a vehicle to a driver includes a reaction force adjustor configured to adjust the reaction force applied from the output adjustment device to the driver with respect to operation of the output adjustment device by the driver, an acceleration detector configured to detect acceleration of a body of the vehicle, and a controller configured to control the reaction force adjustor based on the acceleration detected by the acceleration detector.

In the reaction force control device, the reaction force applied from the output adjustment device to the driver with respect to the operation of the output adjustment device by the driver is adjusted by the reaction force adjustor. The reaction force adjustor is controlled by the controller based on the acceleration detected by the acceleration detector. In this case, the reaction force applied from the output adjustment device to the driver changes according to the acceleration of the body. Thus, it is possible to let the driver recognize whether or not the acceleration of the body is appropriate for the stable travel. Further, the driver can voluntarily adjust the operation amount of the output adjustment device according to the change in the reaction force from the output adjustment device. Therefore, the driver can make the vehicle travel stably without a decrease in the drivability of the driver.

(18) A reaction force control device for adjusting the reaction force applied from an output adjustment device provided in a vehicle including a motor and a drive wheel to a driver includes a reaction force adjustor configured to adjust the reaction force applied from the output adjustment device to the driver with respect to operation of the output adjustment device by the driver, and a controller configured to control the reaction force adjustor such that the reaction force based on a reference value determined according to an operation amount of the output adjustment device is applied from the output adjustment device to the driver, wherein the controller is configured to determine the reference value such that, when a torque is transmitted from the motor to the drive wheel, the reference value shows a first change according to the operation amount of the output adjustment device, and such that, when a torque is transmitted from the drive wheel to the motor, the reference value shows a second change different from the first change according to the operation amount of the output adjustment device.

In the reaction force control device, the reaction force applied from the output adjustment device to the driver with respect to the operation of the output adjustment device is adjusted by the reaction force adjustor. The reaction force adjustor is controlled by the controller such that the reaction force based on the reference value determined according to the operation amount of the output adjustment device is applied from the output adjustment device to the driver.

When the torque is transmitted from the motor to the drive wheel, the reference value shows the first change according to the operation amount of the output adjustment device. On the other hand, when the torque is transmitted from the drive wheel to the motor, the reference value shows the second change different from the first change according to the operation amount of the output adjustment device. Thus, the reaction force applied to the driver differs between a case in which the body is accelerated and a case in which the body is decelerated. In this case, the driver can voluntarily adjust the output of the motor according to the change in the reaction force from the output adjustment device. Therefore, the driver can make the vehicle travel stably without a decrease in the drivability of the driver.

[Advantageous Effects of Invention]

The present invention enables the driver to make the vehicle travel stably without a decrease in the drivability of the driver.

[Brief Description of Drawings]

[FIG. 1] FIG. 1 is a schematic side view showing a motorcycle according to a first embodiment.
[FIG. 2] FIG. 2 is a top view of the motorcycle of Fig. 1.
[FIG. 3] FIG. 3 is a cross sectional view showing the configuration of an accelerator grip device.
[FIG. 4] FIG. 4 is a diagram for explaining the arrangement of a grip sleeve and gears.
[FIG. 5] Fig. 5 is a block diagram for explaining a control system of the motorcycle.
[FIG. 6] Fig. 6 is a diagram showing one example of a friction circle.
[FIG. 7] Fig. 7 is a diagram showing another example of the friction circle.
[FIG. 8] Fig. 8 is a diagram showing a relation between an accelerator opening and reference reaction force.
[FIG. 9] Fig. 9 is a diagram for explaining motor reaction force in a reaction force reinforcement mode.
[FIG. 10] Fig. 10 is a diagram for explaining the motor reaction force in a friction mode.
[FIG. 11] Fig. 11 is a flow chart of an accelerator reaction force adjustment process.
[FIG. 12] Fig. 12 is a flow chart of a friction circle calculation process.
[FIG. 13] Fig. 13 is a flow chart of a reaction force calculation process.
[FIG. 14] Fig. 14 is a flow chart of the reaction force calculation process in a second embodiment.
[FIG. 15] Fig. 15 is a flow chart of the accelerator reaction force adjustment process in a third embodiment.
[FIG. 16] Fig. 16 is a diagram showing a relation between an engine torque and the motor reaction force in the third embodiment.

[Description of Embodiments]

A motorcycle will be described below as one example of a vehicle according to embodiments of the present invention with reference to drawings.

(1) First Embodiment

(1-1) Schematic Configuration of Motorcycle

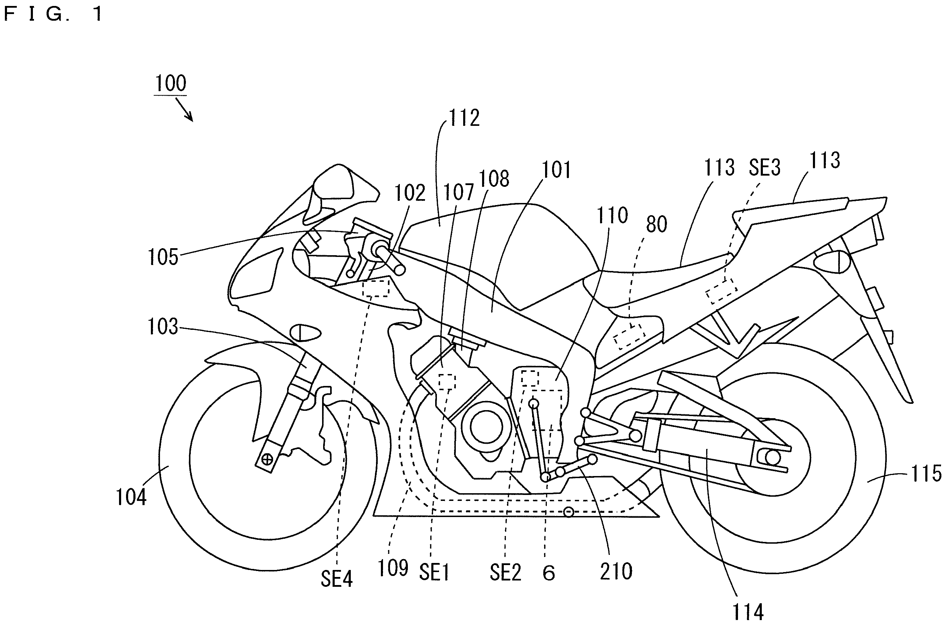

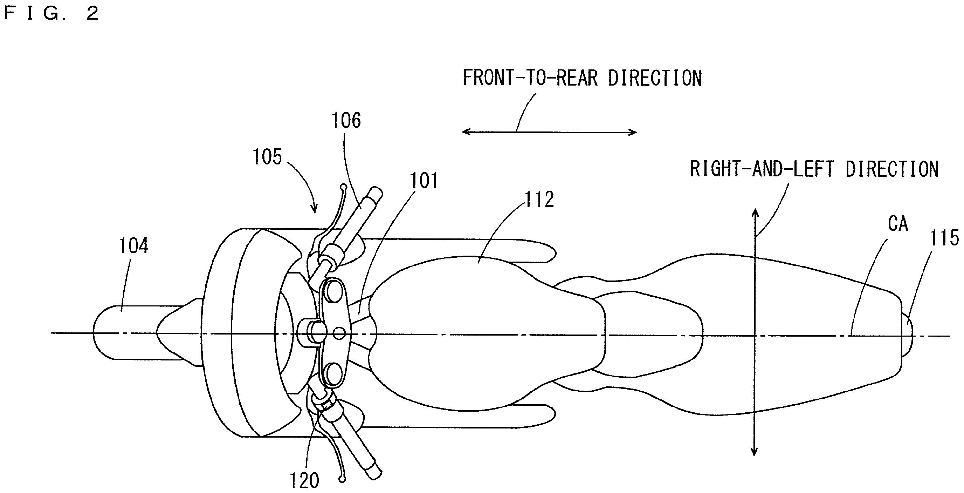

Fig. 1 is a schematic side view showing the motorcycle according to the first embodiment. Fig. 2 is a top view of the motorcycle of Fig. 1. In the motorcycle 100 of Fig. 1, a head pipe 102 is provided at the front end of a body frame 101. A front fork 103 is provided at the head pipe 102 to be swingable to the right and the left. A front wheel 104 is attached to the lower end of the front fork 103 to be rotatable. A handle 105 is provided at the upper end of the head pipe 102. As shown in Fig. 2, an accelerator grip device 106 and a setting switch 120 are provided at the handle 105. A driver adjusts output of an engine 107, described below, by operating the accelerator grip device 106. Further, the driver performs selection of a friction circle and a control mode that are described below by operating the setting switch 120.

In the following description, a front-to-rear direction is a direction that is substantially parallel to a ground surface and parallel to a vertical plane including a central axis CA of the body frame 101 (Fig. 2). Further, a right-and-left direction is a direction substantially parallel to the ground surface and perpendicular to the front-to-rear direction.

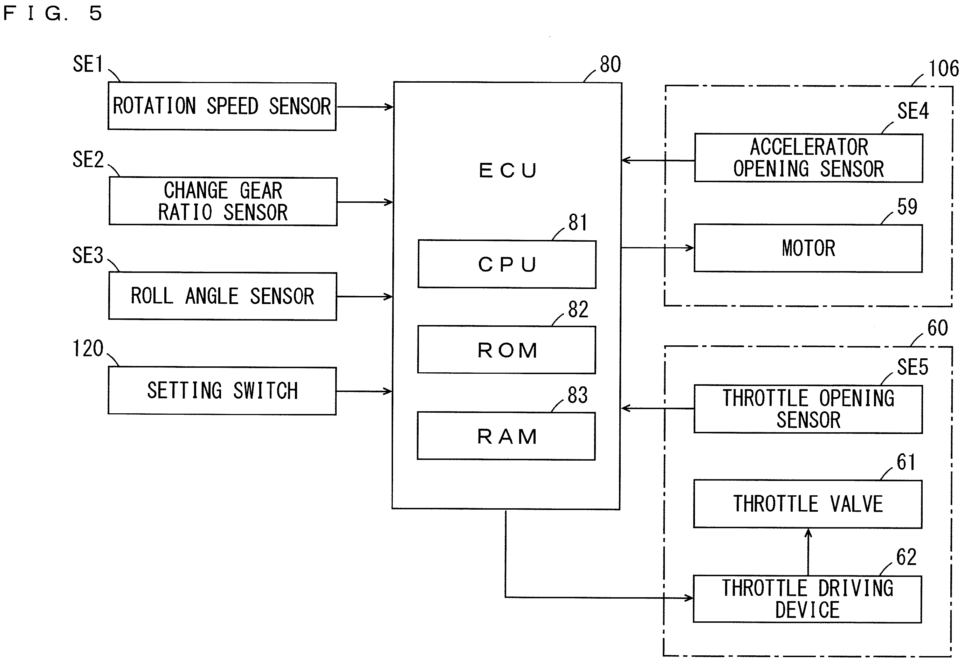

As shown in Fig. 1, the engine 107 including a vaporizer or a fuel injection device is arranged at the center of the body frame 101. A rotation speed sensor SE1 is provided in the engine 107. The rotation speed sensor SE1 detects a rotation speed of the engine 107 (hereinafter referred to as an engine rotation speed). Further, an intake pipe 108 and an exhaust pipe 109 are attached to the engine 107. A throttle device 60 (Fig. 5), described below, is provided at the intake pipe 108. A transmission case 110 is provided behind the engine 107. A transmission 6 and a change gear ratio sensor SE2 are provided in the transmission case 110. A shift pedal 210 is provided on the side of the transmission case 110.

A rear arm 114 is provided to extend behind the transmission case 110. A rear wheel 115 is attached to the rear end of the rear arm 114 to be rotatable. A torque generated by the engine 107 (hereinafter referred to as an engine torque) is transmitted to the rear wheel 115, whereby the rear wheel 115 is driven. The engine 107 is connected to the rear wheel 115 via the transmission 6. The driver operates the shift pedal 210, so that a change gear ratio changes. The change gear ratio refers to a ratio of the rotation speed of the engine 107 to a rotation speed of the rear wheel 115. The change gear ratio sensor SE2 detects the change gear ratio from a gear position of the transmission 6, for example.

A fuel tank 112 is provided above the engine 107, and two seats 113 are provided behind the fuel tank 112 to be arranged in the front-to-rear direction. A roll angle sensor SE3 and an ECU (Electronic Control Unit) 80 are provided below these seats 113. The roll angle sensor SE3 is a gyro sensor, for example, and detects a roll angle of the motorcycle 100. The roll angle of the motorcycle 100 refers to an angle of a tilt of the motorcycle 100 with respect to a vertical direction. For example, the roll angle is 0 degree when the motorcycle 100 is in an upright attitude, and the roll angle is increased when the motorcycle 100 turns to the right or the left. Details of the ECU 80 will be described below.

(1-2) Accelerator Grip Device

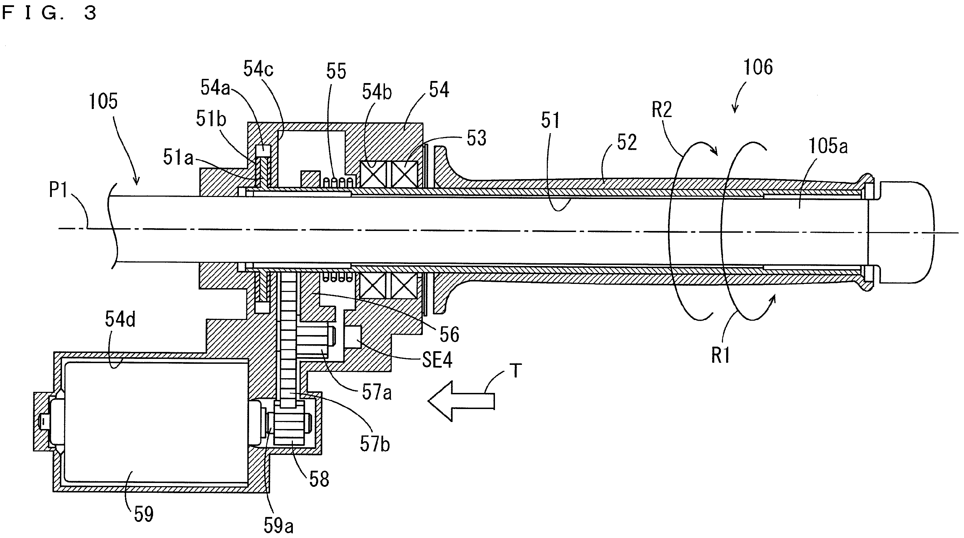

Fig. 3 is a cross sectional view showing the configuration of the accelerator grip device 106. As shown in Fig. 3, the handle 105 has a substantially cylindrical handle bar 105a. The accelerator grip device 106 is provided at the handle bar 105a. The accelerator grip device 106 includes a grip sleeve 51, an accelerator grip member 52, a friction generating member 53, a casing member 54, a coil spring 55, gears 56, 57a, 57b, 58.

The grip sleeve 51 is substantially cylindrical, and provided at the handle bar 105a to be rotatable. Specifically, the grip sleeve 51 is fitted into the handle bar 105a to be slidable with respect to the outer peripheral surface of the handle bar 105a. The accelerator grip member 52 is substantially cylindrical, and is fixed to the outer peripheral surface of the grip sleeve 51. Thus, the accelerator grip member 52 is integrally rotated with the grip sleeve 51 with an axial center P1 of the handle bar 105a being used as a rotation axis.

The driver grips the accelerator grip member 52 and integrally rotates the grip sleeve 51 and the accelerator grip member 52, thereby adjusting the output of the engine 107. Hereinafter, a rotation direction of the grip sleeve 51 and the accelerator grip member 52 for increasing the output of the engine 107 is referred to as an open direction R1, and a rotation direction of the grip sleeve 51 and the accelerator grip member 52 for decreasing the output of the engine 107 is referred to as a close direction R2. The grip sleeve 51 and the accelerator grip member 52 can be rotated to a predetermined open position in the open direction R1, and can be rotated to a predetermined close position in the close direction R2.

The casing member 54 is fixed to the outer peripheral surface of the handle bar 105a. One end of the grip sleeve 51 projects from one end of the accelerator grip member 52, and is stored in the casing member 54. The grip sleeve 51 is not fixed to the casing member 54, and is rotatable with respect to the casing member 54.

The casing member 54 has a bearing groove 54a, a friction generating portion 54b, a gear storage 54c and a motor storage 54d. An annular projection 51a is provided at the one end of the grip sleeve 51. The projection 51 a of the grip sleeve 51 is stored in the bearing groove 54a via a bearing member 51 b to be rotatable. Thus, the movement of the grip sleeve 51 in an axis direction is blocked.

An annular friction generating member 53 is provided at the friction generating portion 54b. The friction generating member 53 is made of a viscoelastic polymeric material such as synthetic rubber, for example, and comes into contact with the outer peripheral surface of the grip sleeve 51. When the grip sleeve 51 is rotated, friction is generated between the grip sleeve 51 and the friction generating member 53. Thus, as described below, reaction force applied from the accelerator grip member 52 to the driver is adjusted. A lubricant such as oil may be supplied to the friction generating portion 54b in order to maintain good contact between the friction generating member 53 and the grip sleeve 51.

The coil spring 55 and the gears 56, 57a, 57b, 58 are stored in the gear storage 54c. A motor 59 is stored in the motor storage 54d. One end of the coil spring 55 is fixed to the grip sleeve 51, and the other end is fixed to the casing member 54. The coil spring 55 energizes the grip sleeve 51 in the close direction R2.

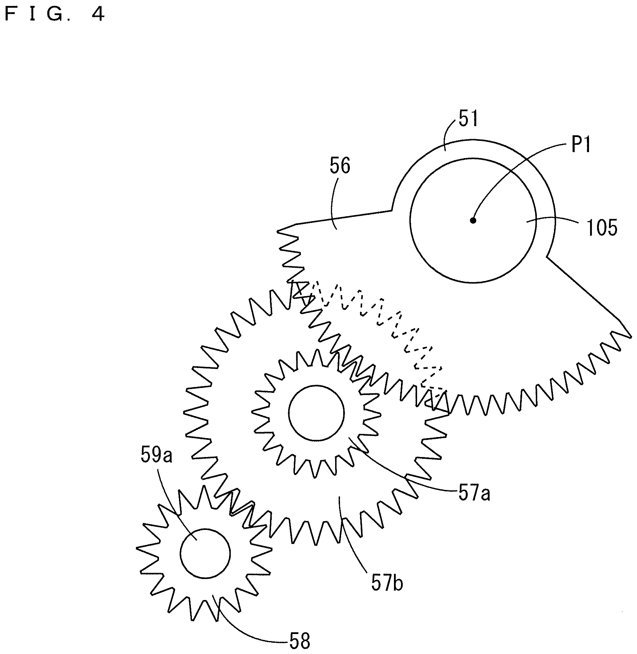

Each of the gears 56, 57a, 57b, 58 is provided to be rotatable around the rotation axis that is directed in the axis direction. Fig. 4 is a diagram for explaining the arrangement of the grip sleeve 51 and the gears 56, 57a, 57b, 58. In Fig. 4, a side surface of each of the grip sleeve 51 and the gears 56, 57a, 57b, 58 as viewed in a direction of an arrow T of Fig. 3 is shown.

As shown in Fig. 4, the gear 56 is integrally provided with the grip sleeve 51 to spread in a fan shape in a certain angular range with respect to an axial center of the grip sleeve 51 (the axial center P1 of the handle bar 105a). The gears 57a, 57b are integrally provided with each other. A diameter of the gear 57a is smaller than that of the gear 57b. The gear 56 is engaged with the gear 57a, and the gear 58 is engaged with the gear 57b.

As shown in Fig. 3, a rotation axis 59a of the motor 59 is arranged in the axis direction. The gear 58 is attached to the rotation axis 59a of the motor 59. In this manner, the grip sleeve 51 and the motor 59 are connected via the gears 56, 57a, 57b, 58. As described below, when a certain condition is satisfied, the motor 59 is controlled such that force in the close direction R1 is applied from the motor 59 to the grip sleeve 51.

An accelerator opening sensor SE4 is arranged at a position facing the gear 57a. The accelerator opening sensor SE4 detects a rotation angle of the grip sleeve 51 as an accelerator opening by detecting a rotation angle of the gear 57a (the gear 57b).

(1-3) Control System

Fig. 5 is a block diagram for explaining the control system of the motorcycle 100. As shown in Fig. 5, the ECU 80 includes a CPU (Central Processing Unit) 81, a ROM (Read On Memory) 82 and a RAM (Random Access Memory) 83. A result of detection of each of the rotation speed sensor SE1, the change gear ratio sensor SE2 and the roll angle sensor SE3, and a content of operation of the setting switch 120 by the driver are supplied to the CPU 81 of the ECU 80.

Further, a result of detection of the accelerator opening sensor SE4 of the accelerator grip device 106 is supplied to the CPU 81 of the ECU 80. The CPU 81 controls the motor 59 of the accelerator grip device 106.

The throttle device 60 includes a throttle valve 61, a throttle driving device 62 and a throttle opening sensor SE5. An opening of the throttle valve 61 (hereinafter referred to as a throttle opening) is adjusted by the throttle driving device 62, whereby an intake amount of the engine 107 is adjusted. Thus, the output of the engine 107 is adjusted. The throttle driving device 62 is a motor, for example. The CPU 81 of the ECU 80 controls the throttle driving device 62 based on the result of detection of the accelerator opening sensor SE4. The throttle opening sensor SE5 detects the throttle opening, and supplies the result of detection to the CPU 81 of the ECU 80.

Control program is stored in the ROM 82 of the ECU 80. The CPU 81 performs an accelerator reaction force adjustment process, described below, by executing the control program stored in the ROM 82 on the RAM 83. Further, in the ROM 82, a map showing a relation among the engine rotation speed, the engine torque and the throttle opening, various numeric values used for the accelerator reaction force adjustment process and the like are stored.

(1-4) Friction Circle

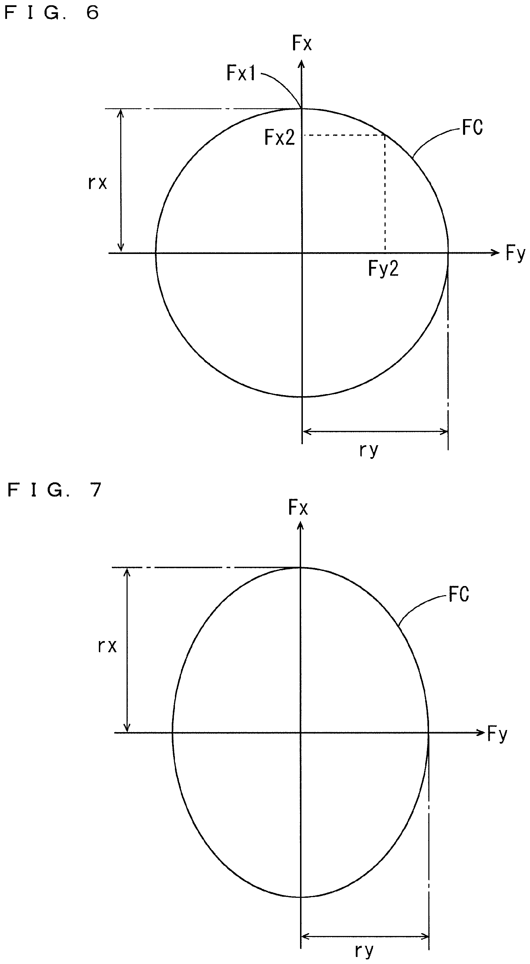

In the accelerator reaction force adjustment process, a calculation process using the friction circle is performed. Fig. 6 is a diagram showing one example of the friction circle. In Fig. 6, the ordinate indicates acceleration Fx in the front-to-rear direction, and the abscissa indicates acceleration Fy in the right-and-left direction. In the example of Fig. 6, acceleration in a forward direction of the body frame 101 (Fig. 1) (acceleration at the time of driving) is expressed in a positive value, and acceleration in a rearward direction of the main frame 101 (acceleration at the time of braking) is expressed in a negative value. Further, acceleration in a rightward direction of the body frame 101 is expressed in a positive value, and the acceleration in a leftward direction of the body frame 101 is expressed in a negative value.

Hereinafter, the acceleration in the front-to-rear direction is referred to as longitudinal direction acceleration, and the acceleration in the right-and-left direction is referred to as a transverse direction acceleration. When the motorcycle 100 is moving in a straight line, the transverse direction acceleration is 0. When the motorcycle 100 turns in the leftward direction, the transverse direction acceleration is a negative value, and when the motorcycle 100 turns in the rightward direction, the transverse direction acceleration is a positive value.

The friction circle FC shows a limit value of each of the longitudinal direction acceleration and the transverse direction acceleration at which the rear wheel 115 (Fig. 1), which is a drive wheel, does not slip with respect to the ground surface. Here, the limit value refers to a maximum value and a minimum value. Hereinafter, a case in which the motorcycle 100 accelerates will be described.

In the example of Fig. 6, when the transverse direction acceleration is 0, the maximum value of the longitudinal direction acceleration is Fx1, and when the transverse direction acceleration is Fy2, the maximum value of the longitudinal direction acceleration is Fx2. In the following description, the maximum value of the longitudinal direction acceleration calculated from the transverse direction acceleration based on the friction circle FC is referred to as longitudinal direction limit acceleration.

While a radius rx of the friction circle FC in a longitudinal axis direction (hereinafter referred to as a longitudinal radius) and a radius ry of the friction circle FC in a transverse axis direction (hereinafter referred to as a transverse radius) are equal to each other and the friction circle FC is a perfect circle in the example of Fig. 6, the longitudinal radius rx and the transverse radius ry may be different from each other and the friction circle FC may be an ellipse other than the perfect circle. Fig. 7 is a diagram showing another example of the friction circle FC. In the example of Fig. 7, the longitudinal radius rx is larger than the transverse radius ry, and the friction circle FC is a longitudinally long ellipse.

The shape and the size of the appropriate friction circle FC differ depending on various conditions such as a condition of the ground surface, a condition of the rear wheel 115 (Fig. 1), skill of the driver and the like. For example, when the ground surface is wet or frozen, friction between the ground surface and the rear wheel 115 is decreased. In this case, the longitudinal radius rx and the transverse radius ry are small. In contrast, when the rear wheel 115 having strong grip force is used, for example, the friction between the ground surface and the rear wheel 115 is increased. In this case, the longitudinal radius rx and the transverse radius ry are large.

In the present embodiment, data of the plurality of friction circles is stored in advance in the ROM 82 of the ECU 80 (Fig. 5). The data of the plurality of friction circles includes different longitudinal radiuses rx and transverse radiuses ry, respectively. The driver selects the data of the one friction circle by operating the setting switch 120. Thus, the one longitudinal radius rx and the one transverse radius ry are determined. The driver may be able to individually select the longitudinal radius rx and the transverse radius ry, respectively.

(1-5) Accelerator Reaction Force

When the driver applies force in the open direction R1 to the accelerator grip member 52 of Fig. 3, the reaction force in the close direction R2 (hereinafter referred to as the accelerator reaction force) is applied from the accelerator grip member 52 to the driver. The accelerator reaction force includes energizing force of the coil spring 55, friction force by the friction generating member 53 and reaction force generated by the motor 59. In the present embodiment, when a predetermined condition is satisfied, the reaction force by the motor 59 is generated. Hereinafter, out of the accelerator reaction force, the reaction force generated by the motor 59 is referred to as motor reaction force, and other reaction force (the reaction force generated by the coil spring 55, the friction generating member 53 and the like) is referred to as reference reaction force. In the present embodiment, the reference reaction force is an example of the reaction force of a reference value, and the motor reaction force is an example of the reaction force of an additional value.

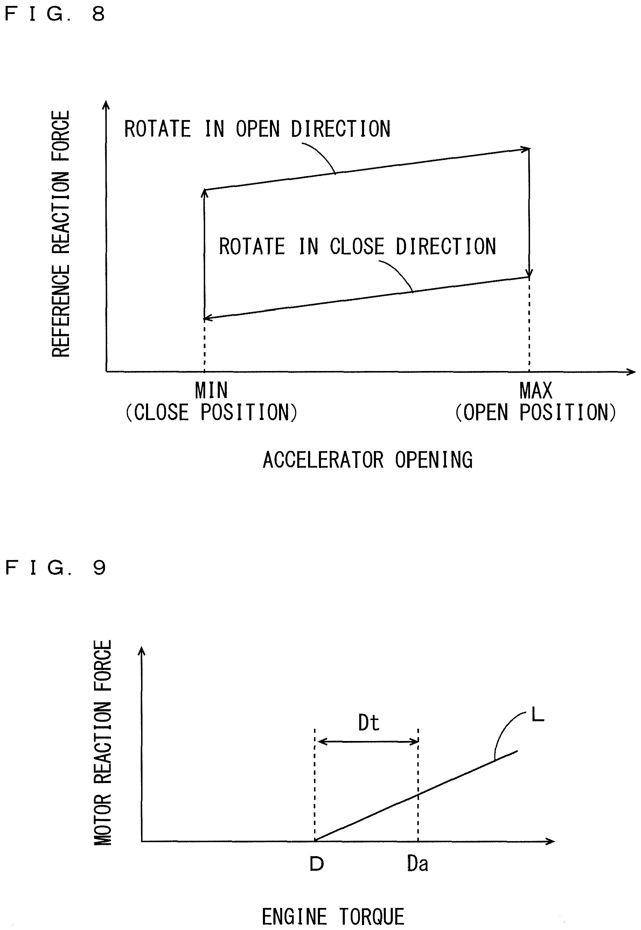

Fig. 8 is a diagram showing a relation between the accelerator opening and the reference reaction force. In Fig. 8, the abscissa indicates the accelerator opening, and the ordinate indicates the reference reaction force. Further, the accelerator opening acquired when the accelerator grip member 52 is at the close position is MIN, and the accelerator opening acquired when the accelerator grip member 52 is at the open position is MAX. The accelerator opening is increased by the rotation of the accelerator grip member 52 in the open direction R1, and the accelerator opening is decreased by the rotation of the accelerator grip member 52 in the close direction R2.

In the example of Fig. 8, a relation between the accelerator opening and the reference reaction force has a hysteresis characteristic. The reference reaction force acquired when the accelerator grip member 52 is rotated in the open direction R1 is larger than the reference reaction force acquired when the accelerator grip member 52 is rotated in the close direction R2. Further, in each of a case in which the accelerator grip member 52 is rotated in the open direction R1 and a case in which the accelerator grip member 52 is rotated in the close direction R2, the larger the accelerator opening is, the larger the reference reaction force is.

The relation between the accelerator opening and the reference reaction force is not limited to the example of Fig. 8. For example, the reference reaction force may change in a curve with respect to the accelerator opening, or the reference reaction force may be constant with respect to the accelerator opening. Further, the reference reaction force acquired when the accelerator grip member 52 is rotated in the open direction R1 and the reference reaction force acquired when the accelerator grip member 52 is rotated in the close direction R2 may be equal to each other.

In the present embodiment, there are a reaction force reinforcement mode, a friction mode and a summing mode as the control mode for controlling the motor reaction force. The driver selects any one control mode of the reaction force reinforcement mode, the friction mode and the summing mode according to the taste or other various conditions by operating the setting switch 120.

Fig. 9 is a diagram for explaining the motor reaction force in the reaction force reinforcement mode. In Fig. 9, the abscissa indicates the engine torque, and the ordinate indicates the motor reaction force.

As shown in Fig. 9, in the reaction force reinforcement mode, when the engine torque is not less than a control starting torque D, the motor reaction force is generated. The control starting torque D is calculated based on the above-mentioned friction circle FC. The control starting torque D will be described below. The motor reaction force changes according to a linear function with respect to the engine torque, and the larger the engine torque is, the larger the motor reaction force is. In this case, a difference value Dt between the current engine torque (hereinafter referred to as a current torque) Da and the control starting torque D is multiplied by a rate of change in the motor reaction force with respect to the engine torque (the inclination of the straight line L of Fig. 9), whereby the motor reaction force to be generated can be calculated.

Therefore, when the engine torque is smaller than the control starting torque D, only the reference reaction force of Fig. 8 is applied to the driver as the accelerator reaction force. On the other hand, when the engine torque is not less than the control starting torque D, resultant force of the motor reaction force of Fig. 9 and the reference reaction force of Fig. 8 is applied to the driver as the accelerator reaction force. Thus, the accelerator opening is inhibited from becoming excessively large. Therefore, the engine torque is inhibited from becoming excessively large, and stability of the motorcycle 100 is ensured.

The change in the motor reaction force in the reaction force reinforcement mode is not limited to the example of Fig. 9. For example, the motor reaction force may change to increase according to a quadratic function with respect to the engine torque, or the motor reaction force may change to increase in steps with respect to the engine torque.

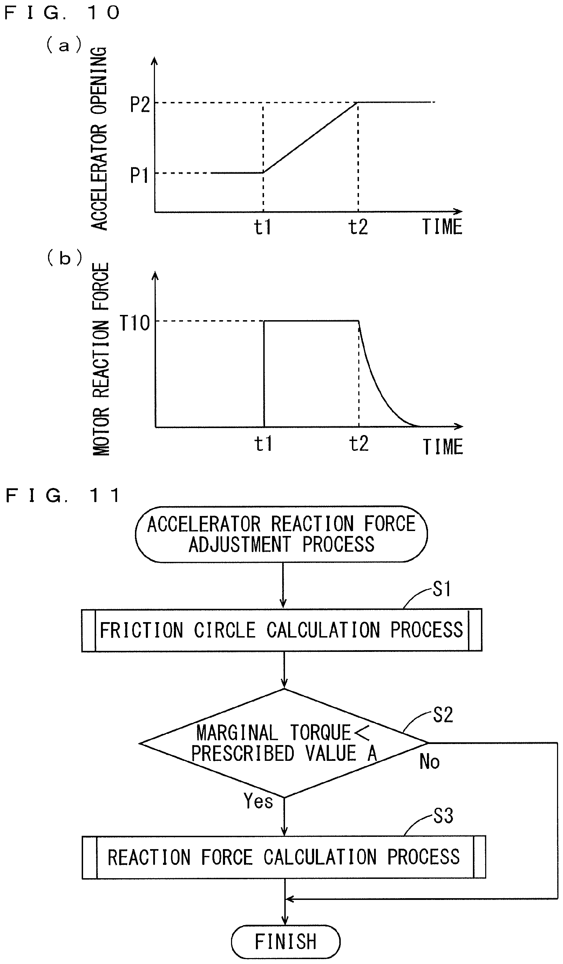

Fig. 10 is a diagram for explaining the motor reaction force in the friction mode. In Fig. 10(a), the abscissa indicates time, and the ordinate indicates the accelerator opening. In Fig. 10(b), the abscissa indicates time, and the ordinate indicates the motor reaction force.

In the friction mode, when the engine torque is not less than the control starting torque D (Fig. 9), the motor reaction force is generated based on a change amount in the accelerator opening per unit time. Specifically, when the accelerator grip member 52 is rotated in the open direction R1, that is, when a time differential value of the accelerator opening is a positive value, the time differential value is multiplied by a predetermined gain, so that the motor reaction force to be generated is calculated. When the time differential value of the accelerator opening is not more than 0 and the motor reaction force is not generated right before, the motor reaction force is not generated. When the time differential value of the accelerator opening is not more than 0, and when the motor reaction force is generated right before, the motor reaction force to be generated is calculated such that the motor reaction force is attenuated at a predetermined time constant.

In the example of Fig. 10(a), the accelerator opening changes from a P1 to a P2 in a period from a time point t1 to a time point t2, and the accelerator opening is kept constant after the time point t2. In this case, as shown in Fig. 10(b), motor reaction force T10 is generated in the period from the time point t1 to the time point t2, and the motor reaction force is attenuated after the time point t2 at a predetermined time constant.

Therefore, when the engine torque is smaller than the control starting torque D, only the reference reaction force of Fig. 8 is applied to the driver as the accelerator reaction force. On the other hand, when the engine torque is not less than the control starting torque D, the resultant force of the motor reaction force generated based on the change amount in the accelerator opening per unit time and the reference reaction force of Fig. 8 is applied to the driver as the accelerator reaction force. Thus, a rapid change in an operation amount of the accelerator grip member 52 is inhibited, and the stability of the motorcycle 100 is ensured.

The change in the motor reaction force in the friction mode is not limited to the example of Fig. 10. For example, predetermined constant motor reaction force may be generated when the accelerator opening changes. Further, when the time differential value of the accelerator opening changes from a positive value to not more than 0, the motor reaction force may be maintained for a constant time period.

In the summing mode, the motor reaction force that changes according to the linear function with respect to the engine torque is generated similarly to the reaction reinforcement mode, and the motor reaction force is generated based on the change amount in the accelerator opening per unit time similarly to the friction mode.

Therefore, when the engine torque is smaller than the control starting torque D, only the reference reaction force of Fig. 8 is applied to the driver as the accelerator reaction force. On the other hand, when the engine torque is not less than the control starting torque D, resultant force of the motor reaction force that changes according to the liner function with respect to the accelerator opening, the motor reaction force generated based on the change amount in the accelerator opening per unit time and the reference reaction force of Fig. 8 is applied to the driver as the accelerator reaction force. Thus, the engine torque is inhibited from becoming excessively large, and the rapid change in the operation amount of the accelerator grip member 52 is inhibited. Thus, the stability of the motorcycle 100 is sufficiently ensured.

In the present embodiment, control operation of the motor 59 by the CPU 81 performed when the engine torque is smaller than the control starting torque D is an example of first control operation, and control operation of the motor 59 by the CPU 81 performed when the engine torque is not less than the control starting torque D is an example of second control operation.

(1-6) Accelerator Reaction Force Adjustment Process

Fig. 11 is a flow chart of the accelerator reaction force adjustment process. The accelerator reaction force adjustment process of Fig. 11 is repeatedly performed in a constant time period by the CPU 81 of the ECU 80.

As shown in Fig. 11, the CPU 81 first performs friction circle calculation process using the above-mentioned friction circle FC (step S1). A marginal torque, which is a difference between a maximum allowable torque and the current torque, is calculated by the friction circle calculation process. Details of the friction circle calculation process and the marginal torque will be described below.

The CPU 81 determines whether or not the calculated marginal torque is smaller than a prescribed value A (step S2). When the calculated marginal torque is smaller than the prescribed value A, the CPU 81 performs reaction force calculation process (step S3), described below, and thereafter, the accelerator reaction force adjustment process is finished. On the other hand, when the calculated marginal torque is not less than the prescribed value A, the CPU 81 finishes the accelerator reaction force adjustment process without performing the reaction force calculation process.

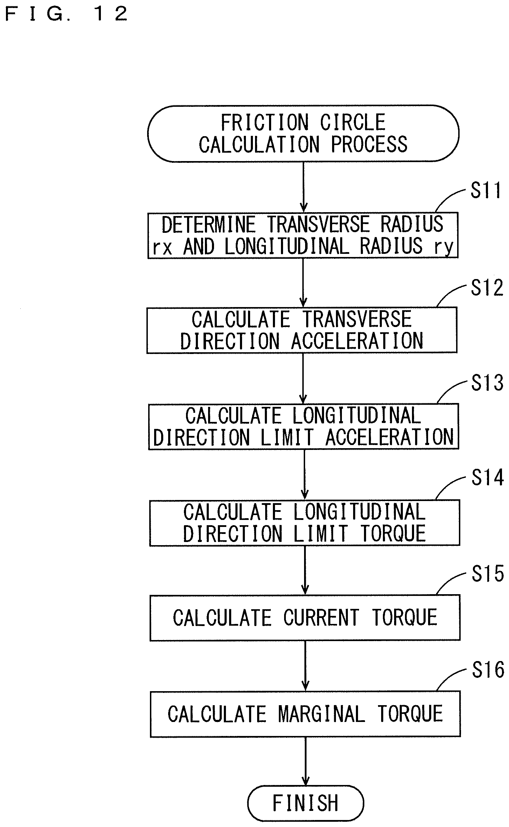

The friction circle calculation process of step S1 will be described. Fig. 12 is a flow chart of the friction circle calculation process. As shown in Fig. 12, the CPU 81 determines the longitudinal radius rx and the transverse radius ry of the friction circle FC based on the content of operation of the setting switch 120 (step S11). Thus, the shape and the size of the friction circle FC are determined.

Next, the CPU 81 calculates the transverse direction acceleration based on the result of detection of the roll angle sensor SE3 (step S12). Specifically, the transverse direction acceleration Fy is calculated using the following formula (1).

[Formula 1]

$$F_y = - \left[ \frac{\sin\phi}{\left( {r_c}/{H - r_c} \right) + \cos\phi} \right] g \quad \cdots (1)$$

In the formula (1), '$\phi$' is a roll angle detected by the roll angle sensor SE3. '$r_c$' is a crown radius of the rear wheel 115. Here, the crown radius is a radius of curvature of a portion of the rear wheel 115 (tread) that comes into contact with the ground surface. 'H' is a height of a center of gravity of the motorcycle 100. 'g' is gravitational acceleration.

Next, the CPU 81 calculates the longitudinal direction limit acceleration based on the friction circle FC determined in step S11 and the transverse direction acceleration Fy calculated in step S12 (step S13). Specifically, the CPU 81 calculates the longitudinal direction limit acceleration Fxmax using the following formula (2).

[Formula 2]

$$F_{xmax} = \sqrt{r_x^2 - \frac{r_x^2}{r_y^2} F_y^2} \quad \cdots (2)$$

Next, the CPU 81 calculates a maximum value of the engine torque (hereinafter referred to as a longitudinal direction limit torque) at which the rear wheel 115 does not slip with respect to the ground surface based on the calculated longitudinal direction limit acceleration Fxmax and the result of detection of the change gear ratio sensor SE2 (step S14). Specifically, a maximum value of the torque of the rear wheel 115 can be calculated from the longitudinal direction limit acceleration Fxmax, and the longitudinal direction limit torque can be calculated from the calculated maximum value of the torque of the rear wheel 115 and the change gear ratio.

Next, the CPU 81 calculates the current torque Da (Fig. 9) based on the result of detection of the rotation speed sensor SE1, the result of detection of the throttle opening sensor SE5 and the map stored in the ROM 82 (step S15). Next, the CPU 81 calculates the marginal torque by subtracting the current torque Da calculated in step S15 from the longitudinal direction limit torque calculated in step S14 (step S16). Thus, the friction circle calculation process is finished.

When the current torque Da reaches the longitudinal direction limit torque, the marginal torque becomes 0. In that case, the rear wheel 115 is more likely to slip with respect to the ground surface. Therefore, when the marginal torque becomes smaller than the prescribed value A, the CPU 81 performs the reaction force calculation process in order to inhibit the marginal torque from becoming 0.

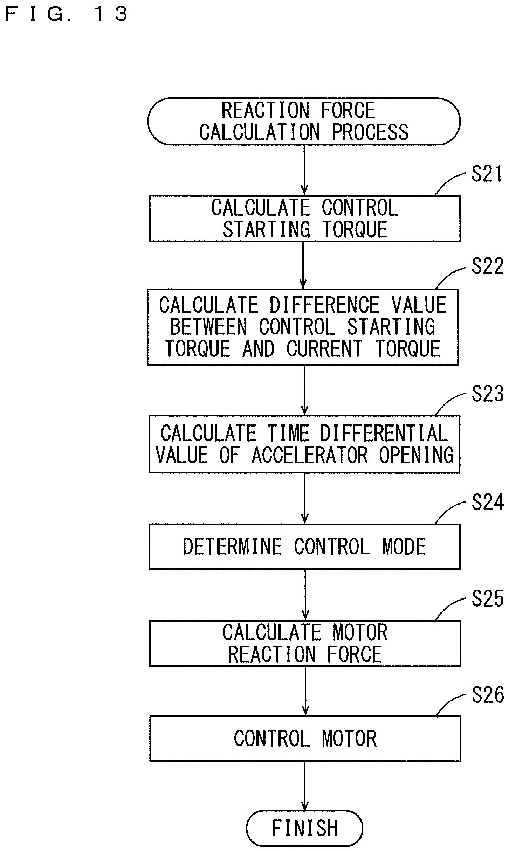

The reaction force calculation process of step S3 of Fig. 11 will be described. Fig. 13 is a flow chart of the reaction force calculation process. As shown in Fig. 13, the CPU 81 calculates the control starting torque D by subtracting the prescribed value A from the longitudinal direction limit torque calculated in step S14 of Fig. 12 (step S21).

Next, the CPU 81 calculates the difference value Dt (Fig. 9) between the calculated control starting torque D and the current torque Da calculated in step S15 of Fig. 12 (step S22). Next, the CPU 81 calculates the time differential value of the accelerator opening based on the result of detection of the accelerator opening sensor SE4 (step S23). For example, the accelerator opening is detected every cycle of the accelerator reaction force adjustment process. The accelerator opening detected in the current cycle is subtracted from the accelerator opening detected in the previous cycle, and the subtraction value is divided by a length of the one cycle, whereby the time differential value of the accelerator opening is calculated.

Next, the CPU 81 determines the control mode for controlling the motor reaction force based on the content of operation of the setting switch 120 (step S24). Then, the CPU 81 calculates the motor reaction force to be generated in the determined control mode (step S25).

Specifically, when it is determined that the control mode is the reaction force reinforcement mode, the CPU 81 calculates the motor reaction force to be generated by multiplying the difference value Dt calculated in step S22 by a rate of change in the motor reaction force with respect to the predetermined engine torque.

When it is determined that the control mode is the friction mode, the CPU 81 determines whether or not the time differential value calculated in step S23 is a positive value. When the calculated time differential value is a positive value, the CPU 81 calculates the motor reaction force to be generated by multiplying the time differential value by a predetermined gain. Further, when the calculated time differential value is not more than 0, and the motor reaction force is generated right before, the CPU 81 calculates the motor reaction force to be generated such that the motor reaction force is attenuated at a predetermined time constant.

When it is determined that the control mode is the summing mode, the CPU 81 sums up the motor reaction force calculated similarly to the reaction force reinforcement mode, and the motor reaction force calculated similarly to the friction mode, thereby calculating the motor reaction force to be generated.

Thereafter, the CPU 81 controls the motor 59 of Fig. 4 such that the motor reaction force calculated in step S25 is generated (step S26). Thus, the reaction force calculation process is finished.

(1-7) Effects

In the motorcycle 100 according to the present embodiment, the motor 59 is controlled based on the transverse direction acceleration calculated from the result of detection of the roll angle sensor SE3. In this case, the accelerator reaction force applied from the accelerator grip member 52 of the accelerator grip device 106 to the driver changes according to the transverse direction acceleration. Thus, it is possible to let the driver recognize whether or not the acceleration of the motorcycle 100 is appropriate for the stable travel. Further, the driver can voluntarily adjust the output of the engine 107 according to the change in the reaction force from the accelerator grip member 52. Therefore, the driver can make the motorcycle 100 travel stably without a decrease in drivability of the driver.

Further, in the present embodiment, the longitudinal direction limit acceleration is calculated from the transverse direction acceleration based on the friction circle, and the motor 59 is controlled based on the calculated longitudinal direction limit acceleration. Thus, the longitudinal direction limit acceleration can be easily calculated. Further, it is possible to let the driver recognize whether or not the acceleration of the motorcycle 100 is appropriate for the stable travel based on the calculated longitudinal direction limit acceleration.

Further, in the present embodiment, the control starting torque D is calculated based on the calculated longitudinal direction limit acceleration, and when the current torque is not less than the control starting torque D, the motor reaction force is generated. Thus, when the acceleration of the motorcycle 100 comes close to the longitudinal direction limit acceleration, the operation of the accelerator grip member 52 by the driver is inhibited by the motor reaction force, and a further increase in the acceleration of the motorcycle 100 is inhibited. Thus, the stability of the motorcycle 100 is ensured.

Further, in the present embodiment, the longitudinal direction limit torque is calculated based on the calculated longitudinal direction limit acceleration and the change gear ratio detected by the change gear ratio sensor SE2, and the current torque is calculated based on the rotation speed detected by the rotation speed sensor SE1 and the throttle opening detected by the throttle opening sensor SE5 and the map stored in the ROM 82. It is determined whether or not the reaction force calculation process for generating the motor reaction force is performed based on a difference between the longitudinal direction limit torque and the current torque that are calculated. Thus, the motor reaction force is generated at an appropriate time. Therefore, it is possible to let the driver accurately recognize whether or not the acceleration of the motorcycle 100 is appropriate for the stable travel.

(2) Second Embodiment

Regarding the motorcycle 100 according to the second embodiment of the present invention, differences from the above-mentioned first embodiment will be described.

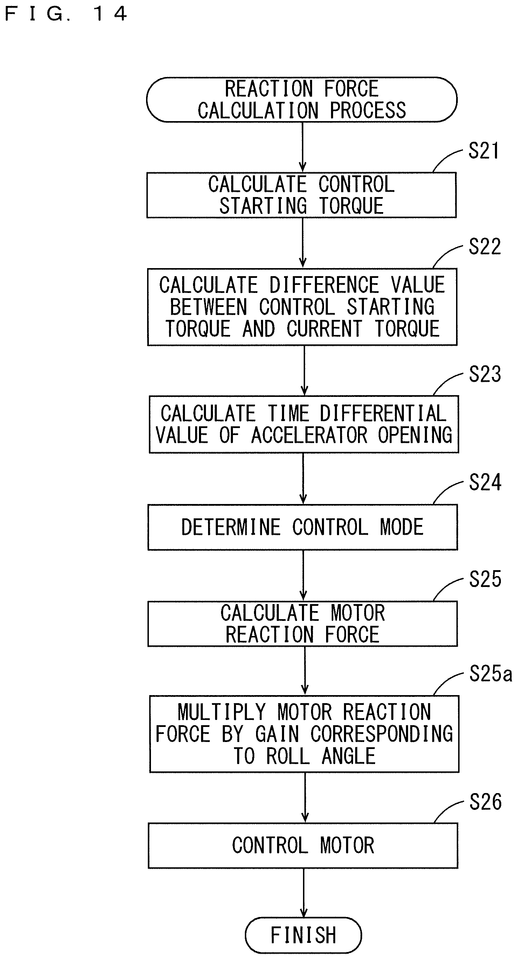

Fig. 14 is a flow chart of the reaction force calculation process in the second embodiment. Regarding the reaction force calculation process of Fig. 14, differences from the reaction force calculation process of Fig. 13 will be described.

In the example of Fig. 14, after the motor reaction force is calculated in step S25, the calculated motor reaction force is multiplied by a gain corresponding to the result of detection of the roll angle sensor SE3 (step S25a). In this case, the larger the roll angle detected by the roll angle sensor SE3 is, the smaller the gain by which the motor reaction force is multiplied is.

When the roll angle is large, the stability of the motorcycle 100 is low. Therefore, when the accelerator reaction force is increased in a case in which the roll angle is large, the drivability of the driver is sometimes decreased. Therefore, the motor reaction force is multiplied by the gain corresponding to the roll angle, whereby the accelerator reaction force is prevented from becoming excessively large in a case in which the roll angle is large. Thus, a decrease in the drivability of the driver is prevented. Therefore, the driver can make the motorcycle 100 travel more stably.

(3) Third Embodiment

Regarding the motorcycle 100 according to the third embodiment of the present invention, differences from the above-mentioned first embodiment will be described.

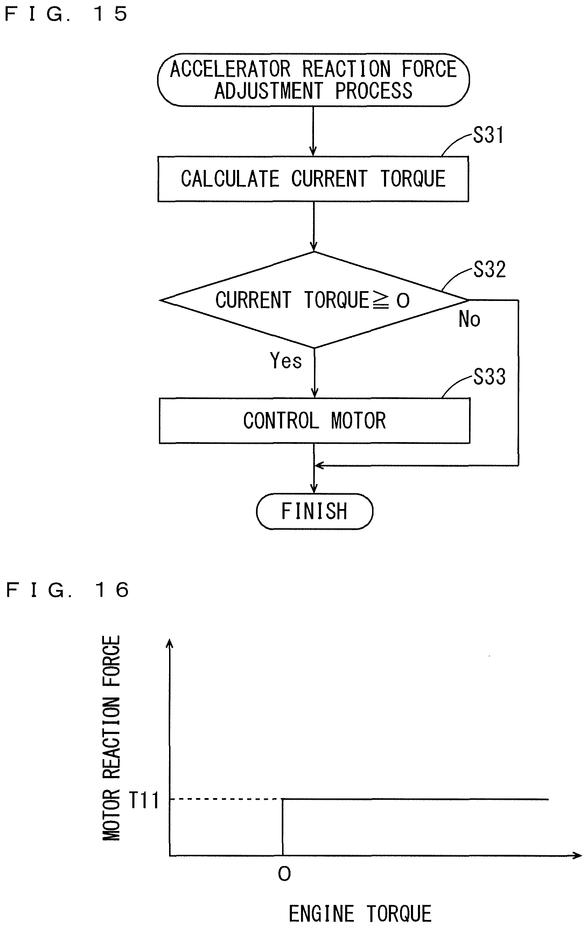

Fig. 15 is a flow chart of the accelerator reaction force adjustment process in the third embodiment. Fig. 16 is a diagram showing a relation between the engine torque and the motor reaction force in the third embodiment. In Fig. 16, the abscissa indicates the engine torque, and the ordinate indicates the motor reaction force.

Regarding the accelerator reaction force adjustment process of Fig. 15, differences from the accelerator reaction force adjustment process of Figs. 11 to 13 will be described. In the example of Fig. 15, the CPU 81 first calculates the current engine torque (the current torque) based on the result of detection of the rotation speed sensor SE1, the result of detection of the throttle opening sensor SE5 and the map stored in the ROM 82 (step S31). Next, the CPU 81 determines whether or not the calculated current torque is not less than 0 (step S32). When the motorcycle 100 accelerates, the current torque becomes larger than 0. In this case, the torque is transmitted from the engine 107 (Fig. 1) to the rear wheel 115. When the motorcycle 100 decelerates, the current torque becomes smaller than 0. In this case, the torque is transmitted from the rear wheel 115 to the engine torque 107.

When the current torque is not less than 0, the CPU 81 controls the motor 59 of Fig. 4 such that constant motor reaction force T11 (Fig. 16) is generated (step S33). Thereafter, the CPU 81 finishes the accelerator reaction force adjustment process. On the other hand, when the current torque is smaller than 0, the CPU 81 finishes the accelerator reaction force adjustment process without generating the motor reaction force as shown in Fig. 16.

Thus, the reaction force applied to the driver differs between a case in which the motorcycle 100 accelerates and a case in which the motorcycle 100 decelerates. Thus, it is possible to let the driver easily recognize the acceleration and the deceleration of the motorcycle 100. Further, the driver can voluntarily adjust the output of the engine 107 according to the change in the reaction force from the accelerator grip member 52 (Fig. 3). Therefore, the driver can make the motorcycle 100 travel stably without a decrease in the drivability of the driver.

In the present embodiment, the accelerator reaction force acquired when the current torque is not less than 0, and the accelerator reaction force acquired when the current torque is smaller than 0 are examples of the reaction force of the reference values, respectively. Further, the change in the accelerator reaction force acquired when the current torque is larger than 0 is an example of a first change, and the change in the accelerator reaction force acquired when the current torque is smaller than 0 is an example of a second change.

The accelerator reaction force adjustment process of Fig. 15 may be performed in addition to the accelerator reaction force adjustment processes of Figs. 11 to 13. Specifically, when the current torque is larger than 0, the motor reaction force T11 of Fig. 16 is generated. Further, when the current torque is not less than the control starting torque D (Fig. 9), the motor reaction force calculated in step S25 of Fig. 13 is generated in addition to the motor reaction force T11 of Fig. 16.

In this case, it is possible to let the driver recognize the acceleration and the deceleration of the motorcycle 100, and it is possible to let the driver recognize whether or not the acceleration of the motorcycle 100 is appropriate for the stable travel. As a result, the driver can make the motorcycle 100 travel more stably.

In the examples of Fig. 15 and 16, the constant motor reaction force T11 is generated when the current torque is not less than 0, and the motor reaction force is not generated when the current torque is smaller than 0, however, the invention is not limited to this. For example, the motor reaction force may be generated when the current torque is smaller than 0. In this case, the motor reaction force generated when the current torque is smaller than 0 is different from the motor reaction force generated when the current torque is not less than 0. Further, when the current torque is not less than 0, the motor reaction force that changes according to the accelerator opening, the engine torque or the like may be generated. Additionally, when the current torque is smaller than 0, the motor reaction force that changes according to the accelerator opening or the engine torque may be generated. In this case, the change in the motor reaction force generated when the current torque is smaller than 0 is different from the change in the motor reaction force generated when the current torque is not less than 0.

(4) Other Embodiments

(4-1)

While the reaction force calculation process is performed in a case in which the difference between the longitudinal direction limit torque and the current torque (the marginal torque) is smaller than the prescribed value A in the above-mentioned first and second embodiments, the invention is not limited to this. For example, the reaction force calculation process may be performed based on a change amount in the difference between the longitudinal direction limit torque and the current torque.

For example, when the time differential value of the difference between the longitudinal direction limit torque and the current torque is calculated, and the calculated time differential value is larger than the prescribed value, the reaction force calculation process is performed. In this case, it is possible to let the driver recognize the change in the difference between the longitudinal direction limit torque and the current torque.

Further, in the reaction force calculation process, the motor reaction force to be generated may be calculated based on the change amount in the difference between the longitudinal direction limit torque and the current torque. For example, the motor reaction force to be generated is calculated such that the larger the change amount in the difference between the longitudinal direction limit torque and the current torque is, the larger the motor reaction force is.

(4-2)

While the longitudinal radius rx and the transverse radius ry are determined by the selection made by the driver in the above-mentioned first and second embodiments, the invention is not limited to this. The longitudinal radius rx and the transverse ry of the friction circle may be automatically determined. For example, a friction coefficient between the ground surface and the rear wheel 115 may be estimated based on the rotating condition and the like of the front wheel 104 or the rear wheel 115, and the longitudinal radius rx and the transverse radius ry of the friction circle may be determined based on the estimated friction coefficient. Further, the longitudinal radius rx and the transverse radius ry of the friction circle may be determined using another friction coefficient estimation technique.

(4-3)

While the transverse direction acceleration is calculated based on the roll angle detected by the roll angle sensor SE3 in the above-mentioned first and the second embodiments, the invention is not limited to this. For example, the acceleration in the direction perpendicular to the front-to-rear direction is detected using an acceleration sensor, and the detected acceleration is corrected according to the tilt of the motorcycle 100, whereby the transverse direction acceleration may be calculated.

(4-4)

While the magnitude of the accelerator reaction force is adjusted by the adjustment of the magnitude of the reaction force generated by the motor 59 in the above-mentioned first to third embodiments, the invention is not limited to this. For example, a sliding member is provided to be slidable with respect to the grip sleeve 51 or the accelerator grip member 52, and the magnitude of friction resistance of the sliding member with respect to the grip sleeve 51 or the accelerator grip member 52 is adjusted, whereby the magnitude of the accelerator reaction force may be adjusted.

(4-5)

While the change gear ratio is acquired by the detection of the change gear ratio by the change gear ratio sensor SE2 in the above-mentioned first and second embodiments, the invention is not limited to this. For example, the change gear ratio may be acquired by the calculation of the change gear ratio from the rotation speed of the engine 107 and the moving speed (the vehicle speed) of the motorcycle 100. The vehicle speed can be calculated from the rotation speed of the front wheel 104 or the rotation speed of the rear wheel 115. In this case, the rotation speed sensor SE1, a sensor that detects the rotation speed of the front wheel 104 or the rear wheel 115, and the ECU 50 are equivalent to a change gear ratio acquirer. Further, the vehicle speed can be calculated by the GPS (Global Positioning System). In this case, the rotation speed sensor SE1, the GPS receiver and the ECU 50 are equivalent to the change gear ratio acquirer.

(4-6)

While the throttle opening detected by the throttle opening sensor SE5 is used as an intake amount correspondence value in the above-mentioned first and second embodiments, the invention is not limited to this. For example, the accelerator opening detected by the accelerator opening sensor SE4 may be used as the intake amount correspondence value instead of the throttle opening. In this case, the accelerator opening sensor SE4 is equivalent to an intake amount correspondence value detector.

Alternatively, an engine air flow sensor that detects an intake amount of the engine 107, or an intake pipe pressure sensor that detects pressure in the intake pipe 108 may be used as the intake amount correspondence value detector. In this case, the intake amount detected by the engine air flow sensor or the pressure detected by the intake pipe pressure sensor is used as the intake amount correspondence value.

(4-7)

While the accelerator reaction force is controlled based on the longitudinal direction limit acceleration calculated using the friction circle in the above-mentioned first and second embodiments, the invention is not limited to this. For example, the longitudinal direction acceleration and the transverse direction acceleration may be detected, respectively, and the accelerator reaction force may be controlled based on the resultant force of the longitudinal direction acceleration and the transverse direction acceleration that are detected. Alternatively, the accelerator reaction force may be controlled based on one of the longitudinal direction acceleration and the transverse direction acceleration, and the accelerator reaction force may be controlled based on the acceleration in an oblique direction that is inclined with respect to the front-to-rear direction.

(4-8)

While the rear wheel 115 is driven by the engine 107 in the above-mentioned embodiment, the invention is not limited to this. The front wheel 104 may be driven by the engine 107.

(4-9)

While the function of the controller is realized by the CPU 81 of the ECU 80 and the control program in the above-mentioned embodiment, at least part of the function of the controller may be realized by a hardware such as an electronic circuit.

(4-10)

While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like, or another vehicle such as a motor tricycle or an automobile including an accelerator pedal instead of the accelerator grip.

When the present invention is applied to the vehicle including the accelerator pedal, the accelerator pedal is equivalent to an output adjustment device. In this case, a reaction force adjustor that can adjust reaction force applied from the accelerator pedal to the driver is provided.

In the above-mentioned embodiment, the motorcycle 100 is an example of a vehicle, the body frame 101 is an example of a body, the engine 107 is an example of a motor and an engine, the rear wheel 115 is an example of a drive wheel, the accelerator grip device 106 is an example of an output adjustment device, the motor 59 is an example of a reaction force adjustor, the roll angle sensor SE3 is an example of an acceleration detector, and the ECU 80 is an example of a controller.

Further, the change gear ratio sensor SE2 is an example of a change gear ratio acquirer, the throttle opening sensor SE5 is an example of an intake amount correspondence value detector, the rotation speed sensor SE1 is an example of a rotation speed detector, the prescribed value A is an example of a predetermined threshold value and the setting switch 120 is an example of a setting unit.

The present invention can be effectively utilized for various vehicles.

**Claims**

1. A vehicle comprising:

   a body (101) having a drive wheel (115);
   a motor (107) that generates a torque for rotating the drive wheel (115);
   an output adjustment device (106) operated by a driver for adjustment of output of the motor (107);
   a reaction force adjustor (59) configured to adjust reaction force applied from the output adjustment device (106) to the driver with respect to operation of the output adjustment device (106);
   **characterised in that** said vehicle comprises:

   an acceleration detector (SE3) configured to detect acceleration of the body (101); and
   a controller (80) configured to control the reaction force adjustor (59) based on the acceleration detected by the acceleration detector (SE3),
   wherein the acceleration detector (SE3) is configured to detect acceleration in a transverse direction that is substantially parallel to a road surface and intersects with a front-to-rear direction of the body (101) as transverse direction acceleration, and
   the controller (80) is configured to acquire maximum allowable acceleration in the front-to-rear direction of the body (101) corresponding to the transverse direction acceleration detected by the acceleration detector (SE3) as longitudinal direction limit acceleration based on a set friction circle, and control the reaction force adjustor (59) based on the acquired longitudinal direction limit acceleration,
   the controller (80) is configured to selectively perform one of first control operation in which the reaction force adjustor (59) is controlled such that reaction force of a reference value determined according to an operation amount of the output adjustment device (106) is applied from the output adjustment device (106) to the driver, and second control operation in which the reaction force adjustor (59) is controlled such that reaction force of a total value of an additional value not less than 0 and the reference value is applied from the output adjustment device (106) to the driver, based on the acquired longitudinal direction limit acceleration, and
   a change gear ratio acquirer (SE2) is provided configured to acquire a change gear ratio between the motor (107) and the drive wheel (115), wherein
   the controller (80) is configured to calculate a maximum allowable torque for rotating the drive wheel (115) as a limit torque based on the change gear ratio acquired by the change gear ratio acquirer (SE2) and the acquired longitudinal direction limit acceleration, and selectively perform one of the first control operation and the second control operation based on the calculated limit torque and a current torque generated by the motor (107),
   or the vehicle comprises: a controller (80) configured to control the reaction force adjuster (59) such that reaction force based on a reference value determined according to an operation amount of the output adjustment device (106) is applied from the output adjustment device (106) to the driver, wherein
   the controller (80) is configured to determine the reference value such that, when a torque is transmitted from the motor (107) to the drive wheel (115), the reference value shows a first change according to an operation amount of the output adjustment device (106), and such that, when a torque is transmitted from the drive wheel (115) to the motor (107), the reference value shows a second change different from the first change according to the operation amount of the output adjustment device (106).

2. A vehicle according to claim 1, wherein the motor (107) includes an engine,
   the vehicle further comprising:

   an intake amount correspondence value detector (SE5) configured to detect an intake amount correspondence value that corresponds to an intake amount of the engine; and

a rotation speed detector (SE1) configured to detect a rotation speed of the engine, wherein the controller (80) is configured to calculate the current torque based on the intake amount correspondence value detected by the intake amount correspondence value detector (SE5) and the rotation speed detected by the rotation speed detector (SE1), and selectively perform one of the first control operation and the second control operation based on the calculated limit torque and the calculated current torque.

3. A vehicle according to claim 1, wherein the controller (80) is configured to perform the first control operation when a difference between the calculated limit torque and the current torque is not less than a predetermined threshold value (A), and perform the second control operation when the difference is less than the threshold value (A).

4. A vehicle according to claim 1, wherein the controller (80) is configured to perform one of the first control operation and the second control operation based on a change amount in a difference between the calculated limit torque and the current torque.

5. A vehicle according to claim 1, wherein the controller (80) is configured to calculate the additional value based on the torque generated by the motor (107) as the second control operation such that the larger the torque generated by the motor (107) is, the larger the additional value is.

6. A vehicle according to claim 1, wherein the controller (80) is configured to calculate the additional value as the second control operation such that the smaller a difference between the calculated limit torque and the current torque is, the larger the additional value is.

7. A vehicle according to claim 1, wherein the controller (80) is configured to calculate the additional value based on a change amount per unit time in the operation amount of the output adjustment device (106) as the second control operation.

8. A vehicle according to claim 1, wherein the controller (80) is configured to calculate the additional value based on a change amount in a difference between the calculated limit torque and the current torque as the second control operation.

9. A vehicle according to claim 1, further comprising a setting unit (120) operated by the driver for setting of the friction circle, or
the friction circle includes an ellipse.

10. A vehicle according to claim 1, wherein the controller (80) is configured to determine the reference value such that, when a torque is transmitted from the motor (107) to the drive wheel (115), the reference value shows a first change according to an operation amount of the output adjustment device (106), and such that, when a torque is transmitted from the drive wheel (115) to the motor (107), the reference value shows a second change different from the first change according to the operation amount of the output adjustment device (106).

11. A vehicle comprising:

   a body (101) having a drive wheel (115);
   a motor (107) that generates a torque for rotating the drive wheel (115);
   an output adjustment device (106) operated by a driver for adjustment of output of the motor (107);
   a reaction force adjustor (59) configured to adjust reaction force applied from the output adjustment device (106) to the driver with respect to operation of the output adjustment device (106);
   **characterised in that** said vehicle comprises:

      an acceleration detector (SE3) configured to detect acceleration of the body (101); and
      a controller (80) configured to control the reaction force adjustor (59) based on the acceleration detected by the acceleration detector (SE3),
      wherein the acceleration detector (SE3) is configured to detect acceleration in a transverse direction that is substantially parallel to a road surface and intersects with a front-to-rear direction of the body (101) as transverse direction acceleration, and
      the controller (80) is configured to acquire maximum allowable acceleration in the front-to-rear direction of the body (101) corresponding to the transverse direction acceleration detected by the acceleration detector (SE3) as longitudinal direction limit acceleration based on a set friction circle, and control the reaction force adjustor (59) based on the acquired longitudinal direction limit acceleration,

the controller (80) is configured to selectively perform one of first control operation in which the reaction force adjustor (59) is controlled such that reaction force of a reference value determined according to an operation amount of the output adjustment device (106) is applied from the output adjustment device (106) to the driver, and second control operation in which the reaction force adjustor (59) is controlled such that reaction force of a total value of an additional value not less than 0 and the reference value is applied from the output adjustment device (106) to the driver, based on the acquired longitudinal direction limit acceleration, and

wherein the controller (80) is configured to calculate a first additional value based on the torque generated by the motor (107) such that the larger the torque generated by the motor (107) is, the larger the additional value is, calculate a second additional value based on a change amount in the operation amount of the output adjustment device (106), and calculate the additional value by summing up the calculated first and second additional values, as the second control operation.

12. A method for controlling travel stability of a vehicle comprising a body (101) having a drive wheel (115), a motor (107) that generates a torque for rotating the drive wheel (115), an output adjustment device (106) operated by a driver for adjustment of output of the motor (107), and a reaction force adjustor (59) configured to adjust reaction force applied from the output adjustment device (106) to the driver with respect to operation of the output adjustment device (106);

the method comprises:

detecting acceleration of the body (101); and

controlling the reaction force adjustor (59) based on the detected acceleration of the body (101),

detecting acceleration in a transverse direction that is substantially parallel to a road surface and intersects with a front-to-rear direction of the body (101) as transverse direction acceleration, and

acquiring maximum allowable acceleration in the front-to-rear direction of the body (101) corresponding to the detected transverse direction acceleration as longitudinal direction limit acceleration based on a set friction circle, and controlling the reaction force adjustor (59) based on the acquired longitudinal direction limit acceleration,

selectively performing one of first control operation in which the reaction force adjustor (59) is controlled such that reaction force of a reference value determined according to an operation amount of the output adjustment device (106) is applied from the output adjustment device (106) to the driver, and second control operation in which the reaction force adjustor (59) is controlled such that reaction force of a total value of an additional value not less than 0 and the reference value is applied from the output adjustment device (106) to the driver, based on the acquired longitudinal direction limit acceleration, and

acquiring a change gear ratio between the motor (107) and the drive wheel (115),

calculating a maximum allowable torque for rotating the drive wheel (115) as a limit torque based on the change gear ratio and the acquired longitudinal direction limit acceleration, and selectively performing one of the first control operation and the second control operation based on the calculated limit torque and a current torque generated by the motor (107),

or the method comprises:

controlling the reaction force adjuster (59) such that reaction force based on a reference value determined according to an operation amount of the output adjustment device (106) is applied from the output adjustment device (106) to the driver, and

determining the reference value such that, when a torque is transmitted from the motor (107) to the drive wheel (115), the reference value shows a first change according to an operation amount of the output adjustment device (106), and such that, when a torque is transmitted from the drive wheel (115) to the motor (107), the reference value shows a second change different from the first change according to the operation amount of the output adjustment device (106).

13. A method for controlling travel stability of a vehicle comprising a body (101) having a drive wheel (115), a motor (107) that generates a torque for rotating the drive wheel (115), an output adjustment device (106) operated by a driver for adjustment of output of the motor (107), and a reaction force adjustor (59) configured to adjust reaction force applied from the output adjustment device (106) to the driver with respect to operation of the output adjustment device (106);

the method comprises:

detecting acceleration of the body (101); and

controlling the reaction force adjustor (59) based on the detected acceleration of the body (101),

detecting acceleration in a transverse direction that is substantially parallel to a road surface and intersects with a front-to-rear direction of the body (101) as transverse direction acceleration, and

acquiring maximum allowable acceleration in the front-to-rear direction of the body (101) corresponding to the detected transverse direction acceleration as longitudinal direction limit acceleration based on a set friction circle, and controlling the reaction force adjustor (59) based on the acquired longitudinal direction limit acceleration,

selectively performing one of first control operation in which the reaction force adjustor (59) is controlled such that reaction force of a reference value determined according to an operation amount of the output adjustment device (106) is applied from the output adjustment device (106) to the driver, and second control operation in which the reaction force adjustor (59) is controlled such that reaction force of a total value of an additional value not less than 0 and the reference value is applied from the output adjustment device (106) to the driver, based on the acquired longitudinal direction limit acceleration, and

calculating a first additional value based on the torque generated by the motor (107) such that the larger the torque generated by the motor (107) is, the larger the additional value is, calculate a second additional value based on a change amount in the operation amount of the output adjustment device (106), and calculate the additional value by summing up the calculated first and second additional values, as the second control operation.

## Patentansprüche

1. Ein Fahrzeug, das umfasst:

   einen Körper (101), der ein Antriebs-Rad (115) hat;
   einen Motor (107), der ein Moment zum Drehen des Antriebs-Rades (115) erzeugt;
   eine Abgabe-Einstellvorrichtung (106), die durch einen Fahrer zur Einstellung einer Abgabe des Motors (107) betätigt ist;
   einen Reaktions-Kraft-Einsteller (59), der konfiguriert ist um eine Reaktions-Kraft, aufgebracht von der Abgabe-Einstellvorrichtung (106) auf den Fahrer, mit Bezug auf die Betätigung der Abgabe-Einstellvorrichtung (106), einzustellen;
   **dadurch gekennzeichnet, dass** dieses Fahrzeug umfasst:

   einen Beschleunigungs-Detektor (SE3), der konfiguriert ist um eine Beschleunigung des Körpers (101) zu erfassen; und
   eine Steuerung (80), die konfiguriert ist um den Reaktions-Kraft-Einsteller (59) auf Grundlage der Beschleunigung, erfasst durch den Beschleunigungs-Detektor (SE3), zu steuern,
   wobei der Beschleunigungs-Detektor (SE3) konfiguriert ist, um Beschleunigung in einer Querrichtung zu erfassen, die im Wesentlichen parallel zu der Straßenfläche ist, und mit einer Vorder-zu-Rück-Richtung des Körpers (101) schneidet, als eine Quer-Richtungs-Beschleunigung, und
   die Steuerung (80) ist konfiguriert, eine maximal gestatete Beschleunigung in der Vorder-zu-Rück-Richtung des Körpers (101) zu erlangen, entsprechend zu der Quer-Richtungs-Beschleunigung, erfasst durch den Beschleunigungs-Detektor (SE3), als Längs-Richtung-Grenz-Beschleunigung, auf Grundlage eines gesetzten Reib-Kreis, und steuert den Reaktions-Kraft-Einsteller (59) auf Grundlage der erlangten Längs-Richtung-Grenz-Beschleunigung,
   die Steuerung (80) ist konfiguriert, um selektiv eine von einer ersten Steuer-Betätigung, in welcher der Reaktions-Kraft-Einsteller (59) gesteuert ist, sodass die Reaktions-Kraft eines Referenzwertes, der gemäß eines Betätigungsbetrags der Abgabe-Einstellvorrichtung (106), der von der Abgabe-Einstellvorrichtung (106) auf den Fahrer aufgebracht ist, bestimmt ist, und einer zweiten Steuer-Betätigung in welcher der Reaktions-Kraft-Einsteller (59) gesteuert ist, sodass eine Reaktions-Kraft eines gesamten Werts eines zusätzlichen Werts nicht kleiner als 0 ist und der Referenzwert ist von der Abgabe-Einstellvorrichtung (106) auf den Fahrer Grundlage der erlangten Längs-Richtung-Grenz-Beschleunigung aufgebracht auf, und
   ein Änderungs-Getriebeverhältnis-Erlanger (SE2) ist vorgesehen, der konfiguriert ist um ein Änderungs-Getriebeverhältnis zwischen dem Motor (107) und dem Antriebs-Rad (115) zu erlangen, wobei
   die Steuerung (80) konfiguriert ist, um ein maximal gestatetes Moment zum Drehen des Antriebs-Rades (115) als ein Grenz-Moment auf Grundlage des Änderungs-Getriebeverhältnis, erlangt durch den Änderungs-Getriebeverhältniserwerber (SE2) und der erlangten Längs-Richtung-Grenz-Beschleunigung zu berechnen, und selektiv eine von der ersten Steuer-Betätigung und der zweiten Steuer-Betätigung auf Grundlage des berechneten Grenz-Moments und eines momentanen Moments, erzeugt durch den Motor (107), durchzuführen,

oder das Fahrzeug umfasst: eine Steuerung (80), die konfiguriert ist um den Reaktions-Kraft-Einsteller (59) zu steuern, sodass die Reaktions-Kraft auf Grundlage eines Referenzwerts der gemäß eines Betätigungsbetrags der Abgabe-Einstellvorrichtung (106), der von der Abgabe-Einstellvorrichtung (106) auf dem Fahrer aufgebracht ist, bestimmt ist, wobei die Steuerung (80) konfiguriert ist, um den Referenzwert zu bestimmten, sodass, wenn ein Moment von dem Motor (107) zu dem Antriebs-Rad (115) übertragen ist, der Referenzwert eine erste Änderung gemäß eines Betätigungsbetrags der Abgabe-Einstellvorrichtung (106) zeigt, und sodass wenn ein Moment von dem Antriebs-Rad (115) zu dem Motor (107) übertragen ist, der Referenzwert eine zweite Änderung, unterschiedlich von der ersten Änderung, gemäß dem Betätigungsbetrag der Abgabe-Einstellvorrichtung (106) zeigt.

2. Ein Fahrzeug gemäß Anspruch 1, wobei der Motor (107) ein Triebwerk beinhaltet, das Fahrzeug umfasst weiterhin:

einen Eingabebetrag-Entsprechungs-Wert-Detektor (SE5), der konfiguriert ist um einen Eingabebetrag-Entsprechungs-Wert zu erfassen, der einem Eingabebetragt des Triebwerks entspricht; und einen Dreh-Geschwindigkeits-Detektor (SE2), der konfiguriert ist um eine Dreh-Geschwindigkeit des Triebwerks zu erfassen, wobei die Steuerung (80) konfiguriert ist, um das momentane Moment auf Grundlage des Eingabebetrag-Entsprechungs-Werts, welcher durch den Eingabebetrag-Entsprechungs-Wert-Detektor (SE5) erfasst ist, und der Dreh-Geschwindigkeit, welche durch den Dreh-Geschwindigkeits-Detektor (SE1) erfasst ist, zu berechnen, und selektiv eine von der ersten Steuer-Betätigung und der zweiten Steuer-Betätigung auf Grundlage des berechneten Grenz-Moments und des berechneten momentanen Moments ausführt.

3. Ein Fahrzeug gemäß Anspruch 1, wobei die Steuerung (80) konfiguriert ist, um die erste Steuer-Betätigung durchzuführen wenn eine Differenz zwischen dem berechneten Grenz-Moment und dem momentanen Grenz-Moment nicht weniger als ein vorgegebener Grenzwert (A) ist und die zweite Steuer-Betätigung durchzuführen wenn die Differenz weniger ist als der Grenzwert (A).

4. Ein Fahrzeug gemäß Anspruch 1, wobei die Steuerung (80) konfiguriert ist um eine von der ersten Steuer-Betätigung und der zweiten Steuer-Betätigung auf Grundlage eines Änderungsbetrags in einer Differenz zwischen dem berechneten Grenz-Moment und dem momentanen Grenz-Moment auszuführen.

5. Ein Fahrzeug gemäß Anspruch 1, wobei die Steuerung (80) konfiguriert ist, um den zusätzlichen Wert auf Grundlage des Moments, das durch den Motor (107) erzeugt ist, als die zweite Steuer-Betätigung zu berechnen, sodass je größer das Moment das durch den Motor erzeugt ist, wird, umso größer der zusätzliche Wert ist.

6. Ein Fahrzeug gemäß Anspruch 1, wobei die Steuerung (80) konfiguriert ist, um den zusätzlichen Wert als den zweiten Steuerbetrag zu berechnen, sodass je kleiner eine Differenz zwischen dem berechneten Grenz-Moment und dem momentanen Moment ist, umso größer der zusätzliche Wert ist.

7. Ein Fahrzeug gemäß Anspruch 1, wobei die Steuerung (80) konfiguriert ist um den zusätzlichen Wert auf Grundlage eines Änderungsbetrags pro Zeit in dem Betätigungsbetrag der Abgabe-Einstellvorrichtung (106) als die zweite Steuer-Betätigung zu berechnen.

8. Ein Fahrzeug gemäß Anspruch 1, wobei die Steuerung (80) konfiguriert ist um den zusätzlichen Betrag auf Grundlage eines Änderungsbetrags in einem Unterschied zwischen dem berechneten Grenz-Moment und dem momentanen Grenz-Moment als den zweiten Steuerbetrag zu berechnen.

9. Ein Fahrzeug gemäß Anspruch 1, das weiterhin eine Setz-Einheit (120) umfasst, welche durch den Fahrer zum Setzen eines Reib-Kreiss betätigt ist, oder der Reib-Kreis beinhaltet eine Ellipse.

10. Ein Fahrzeug gemäß Anspruch 1, wobei die Steuerung (80) konfiguriert ist, um den Referenzwert zu bestimmen, sodass wenn ein Moment von dem Motor (107) zu dem Antriebs-Rad (105) übertragen ist, der Referenzwert eine erste Änderung gemäß eines Betätigungsbetrags der Abgabe-Einstellvorrichtung (106) zeigt, und sodass, wenn ein Moment von dem Antriebs-Rad (105) zu dem Motor (107) übertragen wird, der Referenzwert eine zweite Änderung, unterschiedlich von der ersten Änderung, gemäß dem Betätigungsbetrag der Abgabe-Einstellvorrichtung (106) zeigt.

**11.** Ein Fahrzeug, das umfasst:

einen Körper (101), der ein Antriebs-Rad (115) hat;

einen Motor (107), der ein Moment zum Drehen des Antriebs-Rades (115) erzeugt;

eine Abgabe-Einstellvorrichtung (106), die durch einen Fahrer zur Einstellung einer Abgabe des Motors (107) betätigt ist;

einen Reaktions-Kraft-Einsteller (59), der konfiguriert ist um eine Reaktions-Kraft, aufgebracht von der Abgabe-Einstellvorrichtung (106) auf den Fahrer, mit Bezug auf die Betätigung der Abgabe-Einstellvorrichtung (106), einzustellen;

**dadurch gekennzeichnet, dass** dieses Fahrzeug umfasst:

einen Beschleunigungs-Detektor (SE3), der konfiguriert ist um eine Beschleunigung des Körpers (101) zu erfassen; und

eine Steuerung (80), die konfiguriert ist um den Reaktions-Kraft-Einsteller (59) auf Grundlage der Beschleunigung, erfasst durch den Beschleunigungs-Detektor (SE3), zu steuern,

wobei der Beschleunigungs-Detektor (SE3) konfiguriert ist, um Beschleunigung in einer Querrichtung zu erfassen, die im Wesentlichen parallel zu der Straßenfläche ist, und mit einer Vorder-zu-Rück-Richtung des Körpers (101) schneidet, als eine Quer-Richtungs-Beschleunigung, und

die Steuerung (80) ist konfiguriert, eine maximal gestatete Beschleunigung in der Vorder-zu-Rück-Richtung des Körpers (101) zu erlangen, entsprechend zu der Quer-Richtungs-Beschleunigung, erfasst durch den Beschleunigungs-Detektor (SE3), als Längs-Richtung-Grenz-Beschleunigung, auf Grundlage eines gesetzten Reib-Kreis, und steuert den Reaktions-Kraft-Einsteller (59) auf Grundlage der erlangten Längs-Richtung-Grenz-Beschleunigung,

die Steuerung (80) ist konfiguriert, um selektiv eine von einer ersten Steuer-Betätigung, in welcher der Reaktions-Kraft-Einsteller (59) gesteuert ist, sodass die Reaktions-Kraft eines Referenzwertes, der gemäß eines Betätigungsbetrags der Abgabe-Einstellvorrichtung (106), der von der Abgabe-Einstellvorrichtung (106) auf den Fahrer aufgebracht ist, bestimmt ist, und einer zweiten Steuer-Betätigung in welcher der Reaktions-Kraft-Einsteller (59) gesteuert ist, sodass eine Reaktions-Kraft eines gesamten Werts eines zusätzlichen Werts nicht kleiner als 0 ist und der Referenzwert ist von der Abgabe-Einstellvorrichtung (106) auf den Fahrer Grundlage der erlangten Längs-Richtung-Grenz-Beschleunigung aufgebracht auf, und

wobei die Steuerung (80) konfiguriert ist um einen ersten zusätzlichen Wert auf Grundlage des Moments zu berechnen, erzeugt durch den Motor (197), sodass je größer das Moment erzeugt durch den Motor (107) ist, umso größer ist der zusätzliche Wert, und berechnet einen zweiten zusätzlichen Werts auf Grundlage eines Änderungsbetrags in dem Betätigungsbetrag der Abgabe-Einstellvorrichtung (106), und berechnet den zusätzlichen Wert durch Aufsummieren der berechneten ersten und zweiten zusätzlichen Werte als die zweite Steuer-Betätigung.

**12.** Ein Verfahren zur Steuerung von Fahrstabilität eines Fahrzeugs, das umfasst einen Körper (101), der ein Antriebs-Rad (115) hat, einen Motor (107), der ein Moment zum Drehen des Antriebs-Rades (115) erzeugt, eine Abgabe-Einstellvorrichtung (106), die durch einen Fahrer zur Einstellung einer Abgabe des Motors (107) betätigt ist und einen Reaktions-Kraft-Einsteller (59), der konfiguriert ist um eine Reaktions-Kraft, aufgebracht von der Abgabe-Einstellvorrichtung (106) auf den Fahrer, mit Bezug auf die Betätigung der Abgabe-Einstellvorrichtung (106), einzustellen, das Verfahren umfasst:

Erfassen einer Beschleunigung des Körpers (101): und

Steuern des Reaktions-Kraft-Einstellers (59) auf Grundlage der erfassten des Körpers (101),

Erfassen einer Beschleunigung in einer Querrichtung, die im Wesentlichen parallel zu der Straßenfläche ist, und mit einer Vorder-zu-Rück-Richtung des Körpers (101) schneidet, als eine Quer-Richtungs-Beschleunigung, und

Erlangen einer maximal gestateten Beschleunigung in der Vorder-zu-Rück-Richtung des Körpers (101), entsprechend zu der Quer-Richtungs-Beschleunigung, als Längs-Richtung-Grenz-Beschleunigung, auf Grundlage eines gesetzten Reib-Kreis, und

Steuern des Reaktions-Kraft-Einsteller (59) auf Grundlage der erlangten Längs-Richtung-Grenz-Beschleunigung,

selektiv Durchführen eine von einer ersten Steuer-Betätigung, in welcher der Reaktions-Kraft-Einsteller (59) gesteuert ist, sodass die Reaktions-Kraft eines Referenzwertes, der gemäß eines Betätigungsbetrags der Abgabe-Einstellvorrichtung (106), der von der Abgabe-Einstellvorrichtung (106) auf den Fahrer aufgebracht ist, bestimmt ist, und einer zweiten Steuer-Betätigung in welcher der Reaktions-Kraft-Einsteller (59) gesteuert ist, sodass eine Reaktions-Kraft eines gesamten Werts eines zusätzlichen Werts nicht kleiner als 0 ist und der Referenzwert ist von der Abgabe-Einstellvorrichtung (106) auf den Fahrer Grundlage der erlangten Längs-Richtung-Grenz-Beschleunigung aufgebracht auf, und

Erlangen eines Änderungs-Getriebeverhältnis zwischen dem Motor (107) und dem Antriebs-Rad (115), Berechnen eines maximal gestateten Moments zum Drehen des Antriebs-Rades (115) als ein Grenz-Moment auf Grundlage des Änderungs-Getriebeverhältnis und der erlangten Längs-Richtung-Grenz-Beschleunigung, und selektiv durchführen eine von der ersten Steuer-Betätigung und der zweiten Steuer-Betätigung auf Grundlage des berechneten Grenz-Moments und eines momentanen Moments, erzeugt durch den Motor (107), oder das Verfahren umfasst:

Steuern des Reaktions-Kraft-Einsteller (59), sodass die Reaktions-Kraft auf Grundlage eines Referenzwerts der gemäß eines Betätigungsbetrags der Abgabe-Einstellvorrichtung (106) bestimmt ist, der von der Abgabe-Einstellvorrichtung (106) auf dem Fahrer aufgebracht ist, und Bestimmen des Referenzwerts, sodass, wenn ein Moment von dem Motor (107) zu dem Antriebs-Rad (115) übertragen ist, der Referenzwert eine erste Änderung gemäß eines Betätigungsbetrags der Abgabe-Einstellvorrichtung (106) zeigt, und sodass, wenn ein Moment von dem Antriebs-Rad (115) zu dem Motor (107) übertragen ist, der Referenzwert eine zweite Änderung, unterschiedlich von der ersten Änderung, gemäß dem Betätigungsbetrag der Abgabe-Einstellvorrichtung (106) zeigt.

13. Ein Verfahren zur Steuerung von Fahrstabilität eines Fahrzeugs, das umfasst einen Körper (101), der ein Antriebs-Rad (115) hat, einen Motor (107), der ein Moment zum Drehen des Antriebs-Rades (115) erzeugt, eine Abgabe-Einstellvorrichtung (106), die durch einen Fahrer zur Einstellung einer Abgabe des Motors (107) betätigt ist und einen Reaktions-Kraft-Einsteller (59), der konfiguriert ist um eine Reaktions-Kraft, aufgebracht von der Abgabe-Einstellvorrichtung (106) auf den Fahrer, mit Bezug auf die Betätigung der Abgabe-Einstellvorrichtung (106), einzustellen, das Verfahren umfasst:

Erfassen einer Beschleunigung des Körpers (101): und
Steuern des Reaktions-Kraft-Einstellers (59) auf Grundlage der erfassten des Körpers (101),
Erfassen einer Beschleunigung in einer Querrichtung, die im Wesentlichen parallel zu der Straßenfläche ist, und mit einer Vorder-zu-Rück-Richtung des Körpers (101) schneidet, als eine Quer-Richtungs-Beschleunigung, und
Erlangen einer maximal gestateten Beschleunigung in der Vorder-zu-Rück-Richtung des Körpers (101), entsprechend zu der Quer-Richtungs-Beschleunigung, als Längs-Richtung-Grenz-Beschleunigung, auf Grundlage eines gesetzten Reib-Kreis, und
Steuern des Reaktions-Kraft-Einsteller (59) auf Grundlage der erlangten Längs-Richtung-Grenz-Beschleunigung,
selektiv Durchführen eine von einer ersten Steuer-Betätigung, in welcher der Reaktions-Kraft-Einsteller (59) gesteuert ist, sodass die Reaktions-Kraft eines Referenzwertes, der gemäß eines Betätigungsbetrags der Abgabe-Einstellvorrichtung (106), der von der Abgabe-Einstellvorrichtung (106) auf den Fahrer aufgebracht ist, bestimmt ist, und einer zweiten Steuer-Betätigung in welcher der Reaktions-Kraft-Einsteller (59) gesteuert ist, sodass eine Reaktions-Kraft eines gesamten Werts eines zusätzlichen Werts nicht kleiner als 0 ist und der Referenzwert ist von der Abgabe-Einstellvorrichtung (106) auf den Fahrer Grundlage der erlangten Längs-Richtung-Grenz-Beschleunigung aufgebracht auf, und
Berechnen eines ersten zusätzlichen Werts auf Grundlage des Moments, erzeugt durch den Motor (197), sodass je größer das Moment erzeugt durch den Motor (107) ist, umso größer ist der zusätzliche Wert, und Berechnen eines zweiten zusätzlichen Werts auf Grundlage eines Änderungsbetrags in dem Betätigungsbetrag der Abgabe-Einstellvorrichtung (106), und Berechnen des zusätzlichen Werts durch Aufsummieren der berechneten ersten und zweiten zusätzlichen Werte als die zweite Steuer-Betätigung.

**Revendications**

1. Véhicule comprenant :

un châssis (101) comportant une roue motrice (115) ;
un moteur (107) qui génère un couple pour mettre en rotation la roue motrice (115) ;
un dispositif d'ajustement de puissance (106) actionné par un conducteur pour ajuster une puissance du moteur (107) ;

un ajusteur de force de réaction (59) configuré pour ajuster une force de réaction appliquée par le dispositif d'ajustement de puissance (106) au conducteur en lien avec l'actionnement du dispositif d'ajustement de puissance (106) ;

**caractérisé en ce que** ledit véhicule comprend :

un détecteur d'accélération (SE3) configuré pour détecter une accélération du châssis (101) ; et

une commande (80) configurée pour commander l'ajusteur de force de réaction (59) en se fondant sur l'accélération détectée par le détecteur d'accélération (SE3),

où le détecteur d'accélération (SE3) est configuré pour détecter une accélération dans une direction transversale qui est substantiellement parallèle à une surface d'une route et recoupe une direction avant-arrière du châssis (101) en tant qu'accélération transversale, et

la commande (80) est configurée pour acquérir une accélération maximale acceptable dans la direction avant-arrière du châssis (101), correspondant à l'accélération transversale détectée par le détecteur d'accélération (SE3), en tant qu'accélération longitudinale limite en se fondant sur un cercle de friction réglé et commander l'ajusteur de force de réaction (59) en se fondant sur l'accélération longitudinale limite acquise,

la commande (80) est configurée pour effectuer sélectivement une première opération de commande lors de laquelle l'ajusteur de force de réaction (59) est commandé de telle manière qu'une force de réaction, ayant une valeur de référence déterminée en fonction d'une quantité d'actionnement du dispositif d'ajustement de puissance (106), est appliquée par le dispositif d'ajustement de puissance (106) au conducteur, ou une seconde opération de commande lors de laquelle l'ajusteur de force de réaction (59) est commandé de telle manière qu'une force de réaction, ayant une valeur totale égale à la somme d'une valeur additionnelle non inférieure à 0 et de la valeur de référence, est appliquée par le dispositif d'ajustement de puissance (106) au conducteur, en se fondant sur l'accélération longitudinale limite acquise, et

un acquéreur de changement de rapport de transmission (SE2) est prévu et configuré pour acquérir un changement de rapport de transmission entre le moteur (107) et la roue motrice (115), où

la commande (80) est configurée pour calculer un couple maximal acceptable pour mettre en rotation la roue motrice (115) en tant que couple limite en se fondant sur le changement de rapport de transmission acquis par l'acquéreur de changement de rapport de transmission (SE2) et sur l'accélération longitudinale limite, et pour sélectivement effectuer la première opération de commande ou la seconde opération de commande en se fondant sur le couple limite calculé et un couple actuel généré par le moteur (107),

ou bien le véhicule comprend : une commande (80) configurée pour commander l'ajusteur de force de réaction (59) de telle manière qu'une force de réaction fondée sur une valeur de référence déterminée en fonction d'une quantité d'actionnement du dispositif d'ajustement de puissance (106) est appliquée par le dispositif d'ajustement de puissance (106) au conducteur, où

la commande (80) est configurée pour déterminer la valeur de référence de telle manière que lorsqu'un couple est transmis du moteur (107) à la roue motrice (115), la valeur de référence présente un premier changement conforme à une quantité d'actionnement du dispositif d'ajustement de puissance (106) et de telle manière que lorsqu'un couple est transmis de la roue motrice (115) au moteur (107), la valeur de référence présente un second changement différent du premier changement conforme à la quantité d'actionnement du dispositif d'ajustement de puissance (106).

2.  Véhicule selon la revendication 1, où le moteur (107) comprend un moteur le véhicule comprenant en outre :

un détecteur de valeur correspondante à une quantité d'admission (SE5) configuré pour détecter une valeur correspondante à une quantité d'admission qui correspond à une quantité d'admission du moteur ; et

un détecteur de vitesse de rotation (SE1) configuré pour détecter une vitesse de rotation du moteur, où

la commande (80) est configurée pour calculer le couple actuel en se fondant sur la valeur correspondante à la quantité d'admission détectée par le détecteur de valeur correspondante à la quantité d'admission (SE5) et la vitesse de rotation détectée par le détecteur de vitesse de rotation (SE1) et pour effectuer sélectivement la première opération de commande ou la seconde opération de commande en se fondant sur le couple limite calculé et le couple actuel calculé.

3.  Véhicule selon la revendication 1, où la commande est configurée pour effectuer la première opération de commande lorsqu'une différence entre le couple limite calculé et le couple actuel n'est pas inférieure à une valeur seuil prédéterminée (A) et pour effectuer la seconde opération de commande lorsque la différence est inférieure à la valeur seuil (A).

4. Véhicule selon la revendication 1, où la commande (80) est configurée pour effectuer la première opération de commande ou la seconde opération de commande en se fondant sur une ampleur de changement d'une différence entre le couple limite calculé et le couple actuel.

5. Véhicule selon la revendication 1, où la commande (80) est configurée pour calculer la valeur additionnelle en se fondant sur le couple généré par le moteur (107), en tant que seconde opération de commande, de telle manière que plus le couple généré par le moteur (107) est élevé, plus la valeur additionnelle est élevée.

6. Véhicule selon la revendication 1, où la commande (80) est configurée pour calculer la valeur additionnelle, en tant que seconde opération de commande, de telle manière que plus la différence entre le couple limite calculé et le couple actuel est petite, plus la valeur additionnelle est élevée.

7. Véhicule selon la revendication 1, où la commande (80) est configurée pour calculer la valeur additionnelle en se fondant sur une quantité de changement par unité de temps de la quantité d'actionnement du dispositif d'ajustement de puissance (106), en tant que seconde opération de commande.

8. Véhicule selon la revendication 1, où la commande (80) est configurée pour calculer la valeur additionnelle en se fondant sur une quantité de changement d'une différence entre le couple limite calculé et le couple actuel, en tant que seconde opération de commande.

9. Véhicule selon la revendication 1, comprenant en outre une unité de réglage (120) actionnée par le conducteur pour régler le cercle de friction, ou
le cercle de friction inclut une ellipse.

10. Véhicule selon la revendication 1, où la commande (80) est configurée pour déterminer la valeur de référence de telle manière que lorsqu'un couple est transmis du moteur (107) à la roue motrice (115), la valeur de référence présente un premier changement conforme à une quantité d'actionnement du dispositif d'ajustement de puissance (106) et de telle manière que lorsqu'un couple est transmis de la roue motrice (115) au moteur (107), la valeur de référence montre un second changement différent du premier changement conforme à la quantité d'actionnement du dispositif d'ajustement de puissance (106).

11. Véhicule comprenant :

un châssis (101) comportant une roue motrice (115) ;
un moteur (107) qui génère un couple pour mettre en rotation la roue motrice (115) ;
un dispositif d'ajustement de puissance (106) actionné par un conducteur pour ajuster une puissance du moteur (107) ;
un ajusteur de force de réaction (59) configuré pour ajuster une force de réaction appliquée par le dispositif d'ajustement de puissance (106) au conducteur en lien avec l'actionnement du dispositif d'ajustement de puissance (106) ;
**caractérisé en ce que** ledit véhicule comprend :

un détecteur d'accélération (SE3) configuré pour détecter une accélération du châssis (101) ; et
une commande (80) configurée pour commander l'ajusteur de force de réaction (59) en se fondant sur l'accélération détectée par le détecteur d'accélération (SE3),
où le détecteur d'accélération (SE3) est configuré pour détecter une accélération dans une direction transversale qui est substantiellement parallèle à une surface d'une route et recoupe une direction avant-arrière du châssis (101) en tant qu'accélération transversale, et
la commande (80) est configurée pour acquérir une accélération maximale acceptable dans la direction avant-arrière du châssis (101), correspondant à l'accélération transversale détectée par le détecteur d'accélération (SE3), en tant qu'accélération longitudinale limite en se fondant sur un cercle de friction réglé et commander l'ajusteur de force de réaction (59) en se fondant sur l'accélération longitudinale limite acquise, la commande (80) est configurée pour effectuer sélectivement une première opération de commande lors de laquelle l'ajusteur de force de réaction (59) est commandé de telle manière qu'une force de réaction, ayant une valeur de référence déterminée en fonction d'une quantité d'actionnement du dispositif d'ajustement de puissance (106), est appliquée par le dispositif d'ajustement de puissance (106) au conducteur, ou une seconde opération de commande lors de laquelle l'ajusteur de force de réaction (59) est commandé de telle manière qu'une force de réaction, ayant une valeur totale égale à la somme d'une valeur additionnelle non inférieure à 0 et de la valeur de référence, est appliquée par le dispositif d'ajustement de puissance (106) au conducteur, en se fondant sur l'accélération longitudinale limite acquise, et

la commande (80) est configurée pour calculer une première valeur additionnelle en se fondant sur le couple généré par le moteur (107), de telle manière que plus le couple généré par le moteur (107) est élevé, plus la valeur additionnelle est élevée, calculer une seconde valeur additionnelle en se fondant sur une quantité de changement de la quantité d'actionnement du dispositif d'ajustement de puissance (106) et calculer la valeur additionnelle en additionnant les premières et seconde valeurs additionnelles calculées, en tant que seconde opération de commande.

**12.** Procédé pour contrôler la stabilité en déplacement d'un véhicule comprenant un châssis (101) comportant une roue motrice (115); un moteur (107) qui génère un couple pour mettre en rotation la roue motrice (115); un dispositif d'ajustement de puissance (106) actionné par un conducteur pour ajuster une puissance du moteur (107) ; un ajusteur de force de réaction (59) configuré pour ajuster une force de réaction appliquée par le dispositif d'ajustement de puissance (106) au conducteur en lien avec l'actionnement du dispositif d'ajustement de puissance (106) ; le procédé comprenant les étapes consistant à :

détecter une accélération du châssis (101) ; et

commander l'ajusteur de force de réaction (50) en se fondant sur l'accélération du châssis (101) détectée, détecter une accélération dans une direction transversale qui est substantiellement parallèle à une surface d'une route et recoupe une direction avant-arrière du châssis (101) en tant qu'accélération transversale, et acquérir une accélération maximale acceptable dans la direction avant-arrière du châssis (101), correspondant à l'accélération transversale détectée par le détecteur d'accélération (SE3), en tant qu'accélération longitudinale limite en se fondant sur un cercle de friction réglé et commander l'ajusteur de force de réaction (59) en se fondant sur l'accélération longitudinale limite acquise,

effectuer sélectivement une première opération de commande lors de laquelle l'ajusteur de force de réaction (59) est commandé de telle manière qu'une force de réaction, ayant une valeur de référence déterminée en fonction d'une quantité d'actionnement du dispositif d'ajustement de puissance (106), est appliquée par le dispositif d'ajustement de puissance (106) au conducteur, ou une seconde opération de commande lors de laquelle l'ajusteur de force de réaction (59) est commandé de telle manière qu'une force de réaction, ayant une valeur totale égale à la somme d'une valeur additionnelle non inférieure à 0 et de la valeur de référence, est appliquée par le dispositif d'ajustement de puissance (106) au conducteur, en se fondant sur l'accélération longitudinale limite acquise,

et

acquérir un changement de rapport de transmission entre le moteur (107) et la roue motrice (115),

calculer un couple maximal acceptable pour mettre en rotation la roue motrice (115) en tant que couple limite en se fondant sur le changement de rapport de transmission acquis par l'acquéreur de changement de rapport de transmission (SE2) et sur l'accélération longitudinale limite, et pour sélectivement effectuer la première opération de commande ou la seconde opération de commande en se fondant sur le couple limite calculé et un couple actuel généré par le moteur (107),

ou bien le procédé comprend les étapes consistant à :

commander l'ajusteur de force de réaction (59) de telle manière qu'une force de réaction fondée sur une valeur de référence déterminée en fonction d'une quantité d'actionnement du dispositif d'ajustement de puissance (106) est appliquée par le dispositif d'ajustement de puissance (106) au conducteur, et

déterminer la valeur de référence de telle manière que lorsqu'un couple est transmis du moteur (107) à la roue motrice (115), la valeur de référence présente un premier changement conforme à une quantité d'actionnement du dispositif d'ajustement de puissance (106) et de telle manière que lorsqu'un couple est transmis de la roue motrice (115) au moteur (107), la valeur de référence présente un second changement différent du premier changement conforme à la quantité d'actionnement du dispositif d'ajustement de puissance (106).

**13.** Procédé pour contrôler la stabilité en déplacement d'un véhicule comprenant un châssis (101) comportant une roue motrice (115) ; un moteur (107) qui génère un couple pour mettre en rotation la roue motrice (115); un dispositif d'ajustement de puissance (106) actionné par un conducteur pour ajuster une puissance du moteur (107) ; un ajusteur de force de réaction (59) configuré pour ajuster une force de réaction appliquée par le dispositif d'ajustement de puissance (106) au conducteur en lien avec l'actionnement du dispositif d'ajustement de puissance (106) ; le procédé comprenant les étapes consistant à :

détecter une accélération du châssis (101) ; et

commander l'ajusteur de force de réaction (50) en se fondant sur l'accélération du châssis (101) détectée,

acquérir une accélération maximale acceptable dans la direction avant-arrière du châssis (101), correspondant à l'accélération transversale détectée par le détecteur d'accélération (SE3), en tant qu'accélération longitudinale limite en se fondant sur un cercle de friction réglé et commander l'ajusteur de force de réaction (59) en se fondant sur l'accélération longitudinale limite acquise,

effectuer sélectivement une première opération de commande lors de laquelle l'ajusteur de force de réaction (59) est commandé de telle manière qu'une force de réaction, ayant une valeur de référence déterminée en fonction d'une quantité d'actionnement du dispositif d'ajustement de puissance (106), est appliquée par le dispositif d'ajustement de puissance (106) au conducteur, ou une seconde opération de commande lors de laquelle l'ajusteur de force de réaction (59) est commandé de telle manière qu'une force de réaction, ayant une valeur totale égale à la somme d'une valeur additionnelle non inférieure à 0 et de la valeur de référence, est appliquée par le dispositif d'ajustement de puissance (106) au conducteur, en se fondant sur l'accélération longitudinale limite acquise,

et

calculer une première valeur additionnelle en se fondant sur le couple généré par le moteur (107), de telle manière que plus le couple généré par le moteur (107) est élevé, plus la valeur additionnelle est élevée, calculer une seconde valeur additionnelle en se fondant sur une quantité de changement de la quantité d'actionnement du dispositif d'ajustement de puissance (106) et calculer la valeur additionnelle en additionnant les première et seconde valeurs additionnelles calculées, en tant que seconde opération de commande.

FIG. 1

FIG. 2

FRONT-TO-REAR DIRECTION

RIGHT-AND-LEFT DIRECTION

EP 2 857 301 B1

FIG. 3

F I G. 4

# F I G. 5

EP 2 857 301 B1

F I G. 6

F I G. 7

FIG. 8

REFERENCE REACTION FORCE

ROTATE IN OPEN DIRECTION

ROTATE IN CLOSE DIRECTION

MIN
(CLOSE POSITION)

MAX
(OPEN POSITION)

ACCELERATOR OPENING

FIG. 9

MOTOR REACTION FORCE

Dt

L

D          Da

ENGINE TORQUE

F I G. 1 0

(a)

(b)

F I G. 1 1

F I G. 1 2

```
┌─────────────────────────────┐
│    FRICTION CIRCLE          │
│    CALCULATION PROCESS      │
└─────────────────────────────┘
              │
              ▼                        S11
┌─────────────────────────────┐
│ DETERMINE TRANSVERSE RADIUS │
│ rx AND LONGITUDINAL RADIUS ry│
└─────────────────────────────┘
              │
              ▼                        S12
┌─────────────────────────────┐
│    CALCULATE TRANSVERSE     │
│   DIRECTION ACCELERATION    │
└─────────────────────────────┘
              │
              ▼                        S13
┌─────────────────────────────┐
│   CALCULATE LONGITUDINAL    │
│ DIRECTION LIMIT ACCELERATION│
└─────────────────────────────┘
              │
              ▼                        S14
┌─────────────────────────────┐
│   CALCULATE LONGITUDINAL    │
│   DIRECTION LIMIT TORQUE    │
└─────────────────────────────┘
              │
              ▼                        S15
┌─────────────────────────────┐
│   CALCULATE CURRENT TORQUE  │
└─────────────────────────────┘
              │
              ▼                        S16
┌─────────────────────────────┐
│  CALCULATE MARGINAL TORQUE  │
└─────────────────────────────┘
              │
              ▼
        ┌───────────┐
        │  FINISH   │
        └───────────┘
```

F I G． 1 3

```
┌─────────────────────────┐
│   REACTION FORCE        │
│   CALCULATION PROCESS   │
└─────────────────────────┘
             │
             ▼                        S21
┌─────────────────────────┐
│   CALCULATE CONTROL     │
│   STARTING TORQUE       │
└─────────────────────────┘
             │
             ▼                        S22
┌─────────────────────────┐
│ CALCULATE DIFFERENCE VALUE │
│ BETWEEN CONTROL STARTING   │
│ TORQUE AND CURRENT TORQUE  │
└─────────────────────────┘
             │
             ▼                        S23
┌─────────────────────────┐
│ CALCULATE TIME DIFFERENTIAL │
│ VALUE OF ACCELERATOR OPENING │
└─────────────────────────┘
             │
             ▼                        S24
┌─────────────────────────┐
│  DETERMINE CONTROL MODE │
└─────────────────────────┘
             │
             ▼                        S25
┌─────────────────────────┐
│   CALCULATE MOTOR       │
│   REACTION FORCE        │
└─────────────────────────┘
             │
             ▼                        S26
┌─────────────────────────┐
│     CONTROL MOTOR       │
└─────────────────────────┘
             │
             ▼
      ┌─────────────┐
      │   FINISH    │
      └─────────────┘
```

F I G .  1 4

```
        ┌──────────────────────────┐
        │   REACTION FORCE         │
        │   CALCULATION PROCESS    │
        └──────────────────────────┘
                    │
                    ▼                        S21
        ┌──────────────────────────┐
        │   CALCULATE CONTROL      │
        │   STARTING TORQUE        │
        └──────────────────────────┘
                    │
                    ▼                        S22
        ┌──────────────────────────┐
        │ CALCULATE DIFFERENCE VALUE│
        │ BETWEEN CONTROL STARTING │
        │ TORQUE AND CURRENT TORQUE│
        └──────────────────────────┘
                    │
                    ▼                        S23
        ┌──────────────────────────┐
        │ CALCULATE TIME DIFFERENTIAL│
        │ VALUE OF ACCELERATOR OPENING│
        └──────────────────────────┘
                    │
                    ▼                        S24
        ┌──────────────────────────┐
        │  DETERMINE CONTROL MODE  │
        └──────────────────────────┘
                    │
                    ▼                        S25
        ┌──────────────────────────┐
        │   CALCULATE MOTOR        │
        │   REACTION FORCE         │
        └──────────────────────────┘
                    │
                    ▼                        S25a
        ┌──────────────────────────┐
        │  MULTIPLY MOTOR REACTION │
        │ FORCE BY GAIN CORRESPONDING│
        │      TO ROLL ANGLE       │
        └──────────────────────────┘
                    │
                    ▼                        S26
        ┌──────────────────────────┐
        │     CONTROL MOTOR        │
        └──────────────────────────┘
                    │
                    ▼
             ┌──────────────┐
             │   FINISH     │
             └──────────────┘
```

FIG. 15

```
    ⎛ ACCELERATOR REACTION FORCE ⎞
    ⎝   ADJUSTMENT PROCESS      ⎠
                 │
                 ▼                      ⌐S31
    ┌─────────────────────────────┐
    │   CALCULATE CURRENT TORQUE   │
    └─────────────────────────────┘
                 │
                 ▼
              ╱╲                        ⌐S32
           ╱      ╲
        ╱            ╲
     ╱  CURRENT TORQUE≧O  ╲ ──── No
        ╲            ╱
           ╲      ╱
              ╲╱
               │ Yes
               ▼                        ⌐S33
    ┌─────────────────────────────┐
    │        CONTROL MOTOR         │
    └─────────────────────────────┘
                 │
                 ▼
           ⎛  FINISH  ⎞
           ⎝          ⎠
```

FIG. 16

MOTOR REACTION FORCE (vertical axis)

ENGINE TORQUE (horizontal axis)

T11

O

**REFERENCES CITED IN THE DESCRIPTION**

**Patent documents cited in the description**

- JP H08192731 A
- JP 2002160659 A
- JP 2009041544 A
- JP 2006240491 A
- JP H09249043 A
- JP 2004099026 A